# EUROPÄISCHE PATENTSCHRIFT

(11) **EP 2 419 610 B1**
(45) Veröffentlichungstag und Bekanntmachung des Hinweises auf die Patenterteilung: **10.07.2013**
(21) Anmeldenummer: 10713844.8
(22) Anmeldetag: 12.04.2010
(51) Int. Cl.: F01N 13/18

(54) **GEKAPSELTE ABGASNACHBEHANDLUNGSANLAGE**
ENCAPSULATED EXHAUST GAS TREATMENT DEVICE
DISPOSITIF DE TRAITEMENT DE GAZ D'ÉCHAPPEMENT ENCAPSULÉ

(30) Priorität: 16.04.2009 DE 102009017684
(43) Veröffentlichungstag der Anmeldung: 22.02.2012
(73) Patentinhaber: MTU FRIEDRICHSHAFEN GMBH, 88045 Friedrichshafen (DE)
(72) Erfinder: HEHLE, Marc, 78464 Konstanz (DE); SUDMANNS, Hans, 88048 Friedrichshafen (DE)
(74) Vertreter: Winter, Josef
(86) Internationale Anmeldenummer: PCT/EP2010/002240
(87) Internationale Veröffentlichungsnummer: WO 2010/118845

(56) Entgegenhaltungen:
- WO-A1-95/23918
- WO-A1-03/069138
- WO-A1-2008/086445
- US-A- 2 853 367
- US-A- 3 996 016
- US-A1- 2002 073 666

## Beschreibung

Die Erfindung betrifft eine gekapselte Abgasnachbehandlungsanlage gemäß dem Oberbegriff des Anspruches 1.

Gekapselte Nachbehandlungsanlagen für die Abgase insbesondere von Brennkraftmaschinen von Kraftfahrzeugen, vor allem auch von Nutzfahrzeugen sind in verschiedensten Ausgestaltungen bekannt. So insbesondere auch mit innerhalb eines Gehäuses zu einer Baueinheit zusammengefassten Abgasnachbehandlungseinheiten bei gemeinsamen gehäuseseitigen Versorgungsanschlüssen für diese Abgasnachbehandlungseinheiten, die ihrerseits zumindest teilweise innerhalb der Baueinheit wiederum eingehaust ausgebildet sind. Dadurch ergibt sich nicht nur ein erheblicher Bauaufwand und für die Anlage ein verhältnismäßig großer Raumbedarf. Vielmehr bedingt die Anpassung an verschiedene Einsatzfälle, so die Anpassung an Brennkraftmaschinen verschiedener Größe mit über die Abgasnachbehandlungsanlage laufenden unterschiedlichen Volumenströmen, auch jeweils eigenständig aufgebaute Nachbehandlungsanlagen mit in diesen zusammengefassten, entsprechend ausgelegten Baueinheiten.

Eine derartige, gekapselte Nachbehandlungsanlage ist beispielsweise aus der DE 102 50 050 A1 bekannt, bei der innerhalb der durch ein separates Gehäuse gekapselten Nachbehandlungsanlage mit gehäuseseitigen Versorgungsanschlüssen für die in der Baueinheit zusammengefassten Abgasnachbehandlungseinheiten teilweise wiederum eigenständige Einhausungen vorgesehen und erforderlich sind, um in der gewünschten Abfolge die Durchströmung der Abgasnachbehandlungseinheiten zu erreichen.

So mündet bei axial einander gegenüberliegenden Versorgungsanschlüssen der anströmseitige Versorgungsanschluss auf eine Einströmkammer aus, von der aus über axial zu durchströmende Oxidationaskatalysatoren ein nachgeordneter, ringförmiger und radial zu durchströmender Partikelfilter angeströmt wird. Vom Partikelfilter strömt das Abgas radial innen auf ein zentrales Sammelrohr, auf das die Eindüsung von Harnstoff erfolgt und das gegebenenfalls einen Hydrolysekatalysator aufnimmt. Das Sammelrohr mündet auf eine Umlenkkammer, von der aus, entgegengesetzt zum Sammelrohr, um das Sammelrohr angeordnete SCR-Katalysatoren durchströmt werden, die ihrerseits auf einen benachbart zum Partikelfilter liegenden, gegen den Partikelfilter abgegrenzten ringförmigen Umlenkraum münden. Von diesem Umlenkraum strömt das Abgas in einen von den SCR-Katalysatoren durchsetzten, das Sammelrohr umgreifenden Ringraum. Dieser steht mit dem abgasseitigen und, bezogen auf das die Anlage kapselnde Gehäuse, zum anströmseitigen Versorgungsanschluss axial gegenüberliegenden Versorgungsanschluss in Verbindung.

Eine weitere Ausgestaltungsform einer gekapselten Abgasnachbehandlungsanlage ist aus der US 3 996 016 A bekannt. Diese Abgasnachbehandlungsanlage ist, wie im Oberbegriff des Anspruches 1 vorausgesetzt, modular aus scheibenförmigen Baueinheiten aufgebaut. Die Abgasnachbehandlungseinheiten sind in Ringform ausgebildet sowie, axial aufeinander folgend und axial gegeneinander abgegrenzt, umschließend zu einem zentralen Versorgungskanal angeordnet. Ausgehend von diesem Versorgungskanal werden die ringförmigen Abgasnachbehandlungseinheiten radial durchströmt und sind radial außen von einem Sammelkanal in Ringform umschlossen. Dieser Sammelkanal mündet auf einen koaxial in Verlängerung des Versorgungskanales liegenden Sammelraum aus und ist über diesen an ein Abströmrohr angeschlossen, das in axialer Verlängerung des Versorgungskanales verläuft.

Bei einem solchen modularen Aufbau der Abgasnachbehandlungsanlage aus scheibenförmigen Baueinheiten, die in Richtung der Scheibenebene durchströmt und quer zur Scheibenebene aufeinander folgend miteinander verbunden sind, ist durch die Aneinanderreihung der Module die Voraussetzung dafür geschaffen, eine Abgasanlage in Anpassung an die Zylinderzahl der Brennkraftmaschine für unterschiedliche Konversionsraten und Abgasgegendrücke auszulegen. Dies auch allein durch die Anzahl der zur Abgasnachbehandlungsanlage als Module zusammengefassten Baueinheiten, ohne Änderungen im Aufbau dieser Baueinheiten und zumindest ohne prinzipielle Änderungen bei der Zusammenfassung der Baueinheiten zur Abgasnachbehandlungsanlage.

Ein weiterer Aufbau für eine Abgasnachbehandlungsanlage ist aus der DE 20 2007 004 230 U1 bekannt, bei der in axialer Richtung aneinander anschließende und axial durchströmte Abgasnachbehandlungseinheiten unterschiedlicher Funktion vorgesehen sind. Diese sind in einem gemeinsamen Gehäuse lagefest zueinander über Tragringe abgestützt. Das gemeinsame rohrförmige Gehäuse besteht aus den Abgasnachbehandlungseinheiten entsprechenden, axial aneinander anschließenden Rohrabschnitten, die jeweils eine der Abgasnachbehandlungseinheiten aufnehmen und die in ihren axial gegeneinander gerichteten Stoßbereichen von Spannbändern umschlossen sowie über diese Spannbänder lagefest und abdichtend zur Anlage verbunden sind.

Der Erfindung liegt die Aufgabe zugrunde, unter Beibehaltung der Modularität des Aufbaus eine Flexibilisierung in Anpassung an die jeweiligen Betriebserfordernisse, so auch die Größe des über die jeweilige Anlage zu verarbeitenden Abgasstromes, in der Funktion und im Aufbau zu ermöglichen, und zwar bei guten Voraussetzungen für eine vereinfachte Fertigung, die Durchführung von Wartungs- und Montagearbeiten und, soweit erforderlich, die thermische Abgrenzung der jeweiligen Abgasnachbehandlungseinheiten, und dies bei insgesamt leichtem und dennoch stabilem Aufbau des kapselnden Gehäuses.

Die Grundvoraussetzungen hierfür sind durch die Merkmale des Anspruches 1 geschaffen, die es ermöglichen, die Abgasnachbehandlungseinheiten aus bevorzugt blockartigen Funktionselementen aufzubauen, wobei diese Funktionselemente zeilenförmig quer zur Durchströmungsrichtung in der Scheibenebene aufeinander folgend angeordnet sind und bevorzugt funktionsgleich sind.

Hiervon ausgehend ist insgesamt eine Ausgestaltung einer Abgasnachbehandlungsanlage in erfindungsgemäßer Weise auch in Zusammenfassung unterschiedlicher Funktionselemente möglich, so insbesondere von einem Oxidationskatalysator, einem Rußpartikelfilter und einem Stickoxid-Katalysator in einer scheibenförmigen Baueinheit in funktionaler Hintereinanderanordnung.

Für den Aufbau der jeweiligen Baueinheiten, und im Hinblick auf die Zusammenfügung solcher Baueinheiten zu einer Abgasnachbehandlungsanlage erweist es sich als zweckmäßig, dass die jeweilige Baueinheit einen einen Teil der Kapsel der Abgasnachbehandlungsanlage bildenden Rahmen aufweist.

Dies macht es in einfacher Weise möglich, die Funktionselemente in Richtung der jeweiligen Zeilen zwischen gegenüberliegenden Rahmenseiten einzuspannen, wobei die Funktionselemente quer zur Scheibenebene bevorzugt zumindest nahezu bündig zu den Stirnseiten des jeweils aufnehmenden Rahmens liegen. Die Funktionselemente erstrecken sich so mit dem umschließenden Rahmen in einer gemeinsamen Ebene, so dass bei der Verspannung der Rahmen quer zur Scheibenebene - zur Bildung der Kapsel - auch die einander entsprechenden Funktionselemente der aufeinander folgenden Baueinheiten quer zur Scheibenebene aufeinander abgestützt sind. Als Funktionselemente kommen insbesondere Keramiksubstrate oder metallische Grundkörper zum Einsatz.

Zur Zusammenspannung der Rahmen quer zur Scheibenebene werden bevorzugt Spannverbindungen ohne Eingriff in die Baueinheiten eingesetzt, insbesondere zu den Baueinheiten umfangsseitig übergreifende Spannverbindungen vorgesehen. Dies ermöglicht insbesondere auch die Ausbildung der Kapsel, also des Gehäuses der Abgasnachbehandlungsanlage, durch die Rahmen der Baueinheiten. Die Rahmen sind erfindungsgemäß, bevorzugt quer zur Scheibenebene elastisch gegeneinander abgestützt, dichtend verbunden, wodurch auch Wärmedehnungen der Abgasanlage ausgeglichen werden können.

Die Verspannung der die Module bildenden Baueinheiten erfolgt zweckmäßigerweise über quer zur Scheibenebene sich erstreckende Zuganker, die bevorzugt umfangsseitig übergreifend zu den Rahmen liegen. Dadurch, dass die Zuganker sich außerhalb der Rahmen erstrecken, sind die Zuganker von den betriebsbedingt auftretenden Temperaturschwankungen der Abgasanlage im Wesentlichen nicht berührt und bleiben kalt.

Abgestützt sind die Zuganker in Zugrichtung gegen Deckelteile, die die endseitigen Baueinheiten der jeweiligen Abgasnachbehandlungsanlage parallel zur Scheibenebene stirnseitig überdecken. Die Deckelteile erstrecken sich bevorzugt zumindest auf ihrer den Modulen zugewandten Innenseite flächig parallel zur Scheibenebene und weisen zweckmäßigerweise eine außenseitige Stützverrippung auf, gegen die umfangsseitig die Zuganker abgestützt sind. Dies zweckmäßigerweise über sich in Richtung der Zuganker erstreckende, von den Zugankern durchsetzte Augen, die an einer randseitig umlaufenden Stützrippe vorgesehen sind.

Die elastische Abstützung zwischen den Rahmen, und entsprechend bevorzugt auch der Funktionselemente, lässt sich einfach und zweckmäßig über keramische Fasermatten erreichen, die zumindest im Bereich der Rahmen und der Funktionselemente bevorzugt zwischen den Rahmen, zwischen dem jeweiligen Rahmen und den vom Rahmen eingespannten Funktionselementen und zwischen den Funktionselementen eine elastische und bevorzugt auch gasdichte Zwischenlage bilden, über die Wärmedehnungen ausgeglichen werden können und über die zusätzlich auch eine Abgrenzung der Funktionselemente gegeneinander quer zu deren Durchströmungsrichtung erreicht wird. In Durchströmungsrichtung ergeben sich damit kaminartige, gegeneinander abgegrenzte Durchströmungswege. Dies nicht nur bezogen auf die jeweils aufeinander folgenden Baueinheiten, sondern auch bezogen auf die zeilenförmig quer zur Durchströmungsrichtung innerhalb eines Rahmens angeordneten Funktionselemente, wozu diese quer zur Zeilenrichtung, also quer zur Durchströmungsrichtung über zwischenliegende elastische Matten, ebenfalls insbesondere Keramikfasermatten, gegeneinander abgegrenzt sind.

Dadurch ergibt sich auch in Zeilenrichtung eine elastische Abstützung, und zwar zwischen einander gegenüberliegenden Seiten des jeweiligen Rahmens, und über diese elastische Abstützung eine Fixierung der Lage der Funktionselemente im jeweiligen Rahmen.

Die Einbringung der in der jeweiligen Zeile jeweils in Zeilenform aufeinander folgenden Funktionselemente zwischen gegenüberliegenden Rahmenseiten lässt sich in vorteilhafter Weise mit Hilfe einer Spannvorrichtung bewerkstelligen, über die die einer Zeile zugeordneten Funktionselemente in Berücksichtigung der Elastizität der zwischen den Funktionselementen jeweils liegenden elastischen Abstützungen, insbesondere Fasermatten, auf eine Länge zusammengespannt werden, die kleiner ist als der Abstand der gegenüberliegenden Rahmenseiten, zwischen denen die Funktionselemente letztlich verspannt liegen sollen. Hierdurch können die Funktionselemente in Zeilenform zusammengefügt zwischen die einander gegenüberliegenden Rahmenseiten eingeschoben werden. Zweckmäßigerweise sind überdeckend zu den endseitigen, den Rahmenseiten benachbarten Funktionselementen überdeckende Stützplatten vorgesehen. Diese sind bevorzugt ebenfalls gegen die jeweils benachbarten Funktionselemente über eine elastische Zwischenlage, insbesondere eine Fasermatte abgestützt.

Die Stützplatten machen es ohne punktuelle Überlastung der Funktionselemente möglich, mit einer einfachen Spannvorrichtung als Montagehilfe, so insbesondere einem Spannrahmen mit zugeordneten Spannelementen, die Funktionselemente einer Zeile zusammenzuspannen, bis diese quer zur Scheibenebene und quer zur Durchströmungsrichtung zwischen die jeweils gegenüberliegenden Rahmenseiten eingeschoben werden können. Die Einschubtiefe ist dabei zunächst auf den in Einschubrichtung gegebenen, zum Spannrahmen frei liegenden Überstandsbereich der Funktionselemente und der von diesen überdeckten Stützplatten beschränkt. Bei zwischen die gegenüberliegenden Rahmenseiten zunächst teilweise eingeschobenen Funktionselementen kann die Spannvorrichtung gelöst werden. Nachfolgend können die in einer Zeile zusammengefassten Funktionselemente voll in den Rahmen - bis zum im Wesentlichen bündigen Abschluss mit dem Rahmen - eingeschoben werden, wobei die Stützplatten Gleitauflagen bilden und gegebenenfalls entsprechend beschichtet sein können.

Zur Stabilisierung der zwischen den in Zeilenrichtung aufeinander folgenden Funktionselementen liegenden Fasermatten, die in Anbetracht der quer zur Spannrichtung erfolgenden Durchströmung sowie in Abhängigkeit von der Einbausituation der Abgasnachbehandlungsanlage unter Umständen auch quer zur Einspannrichtung belastet sind, erweist es sich als zweckmäßig, für diese Fasermatten eine Mattenträgeranordnung vorzusehen. Bei dieser ist bevorzugt beidseitig eines Mattenträgers im Übergang zum jeweils anliegenden Funktionselement eine Fasermatte, oder eine fasermattenartige Abdeckung zum Mattenträger vorgesehen ist. Als Mattenträger können Lochbleche oder anderweitig strukturierte, eine Verhakung der abdeckenden Fasermatten bewirkende Tragmittel vorgesehen sein. Ferner kann, insbesondere in Abhängigkeit von der Länge der jeweiligen Zeile von Funktionselementen, auch eine Abstützung zumindest einzelner der Mattenträger gegen den Rahmen vorgesehen werden. Dies beispielsweise gegen eine parallel zur jeweiligen Zeile der Funktionselemente verlaufende Zugverspannung zwischen den gegenüberliegenden Rahmenseiten.

Bei der erfindungsgemäßen Lösung werden die in Zeilen zwischen gegenüberliegenden Rahmenseiten eingespannten Funktionselemente aber bevorzugt nicht nur durch diese Querverspannung fixiert, sondern auch quer hierzu durch die die Rahmenteile zusammenspannenden Deckelteile, die im Bereich der Funktionselemente über die jeweils zwischenliegenden Fasermatten die Funktionselemente gegeneinander verspannen, so dass sich über die Funktionselemente letztlich auch eine Aussteifung für die Rahmen ergibt, die, bei leichter Bauweise für die Rahmen, eine hohe Formhaltigkeit des kapselnden Gehäuses zur Folge hat.

Die jeweiligen Rahmen können bevorzugt auch Teile von Überleitungsverbindungen zwischen den jeweiligen Abgasnachbehandlungseinheiten bilden. Ferner können solche Überleitungsverbindungen kanalartig längs der Rahmen verlaufen, so dass die jeweilige Überleitungsverbindung auch günstige Möglichkeiten für den funktionellen Zugriff auf jeweilige Abgasnachbehandlungseinheiten ermöglicht.

So kann erfindungsgemäß beispielsweise für den SCR-Katalysator die Harnstoffzuführung über eine außenseitig zum jeweiligen Rahmen vorgesehene Dosiereinheit erfolgen, die auf die Überleitungsverbindung zum SCR-Katalysator ausmündet, so dass sich über die Überleitungsverbindung auch eine hinreichend lange Mischstrecke für die Vermischung des Harnstoffs mit dem Abgas in dessen Zuströmung auf den SCR-Katalysator, und damit die erforderliche Freisetzung des Ammoniaks, ergibt. Insbesondere in Verbindung mit der Dosiereinheit, gegebenenfalls aber auch separat kann dieser nachgeordnet ein Hydrolyse-Katalysator vorgesehen und bevorzugt in entsprechender Weise am Rahmen angebracht sein, um, wie vorbeschrieben, den auf die Überleitungsverbindung eingespeisten Harnstoff aufzuspalten und das so erhaltene Ammoniak mit dem Abgas zu vermischen.

Entsprechend der Dosiereinheit kann auch eine Wartungseinheit mit der Überleitungsverbindung verbunden sein, gegebenenfalls in Baueinheit zur Dosiereinheit, wobei über die Wartungseinheit Druckluft auf den Rußfilter entgegen der Durchströmungsrichtung eingeblasen werden kann, womit der der Abgaszuführung dienende Versorgungsanschluss für die kurze Zeit des Wartungsbetriebes als Austrittsöffnung für die Ölasche dient. In entsprechender Weise kann über diesen Versorgungsanschluss auch der Anschluss eines Regenerationsbrenners erfolgen, falls ein solcher eingesetzt wird, um den am Rußfilter angelagerten Ruß abzubrennen.

Weitere Einzelheiten und Merkmale ergeben sich aus den Zeichnungen und der zugehörigen Beschreibung. Es zeigen:
- Fig. 1: eine perspektivische Außenansicht einer Abgasnachbehandlungsanlage gemäß der Erfindung, die modular aus scheibenförmigen Baueinheiten aufgebaut ist, die ihrerseits in Richtung der Scheibenebene zu durchströmende Abgasnachbehandlungseinheiten aufnehmen,
- Fig. 2: eine perspektivische Darstellung einer solchen Baueinheit, deren Rahmen einen Teil des die Abgasnachbehandlungsanlage kapselnden Gehäuses bildet und mehrere, in Durchströmungsrichtung aufeinander folgende und jeweils aus gleichen Funktionselementen aufgebaute Abgasnachbehandlungseinheiten aufnimmt,
- Fig. 3: eine Baueinheit, die teilweise in Richtung ihrer Scheibenebene aufgeschnitten dargestellt ist und so die zum Rahmen integrierte Überleitungsverbindung zwischen der als Rußfilter ausgebildeten Abgasnachbehandlungseinheit und dem nachgeordneten Stickoxid-Katalysator veranschaulicht,

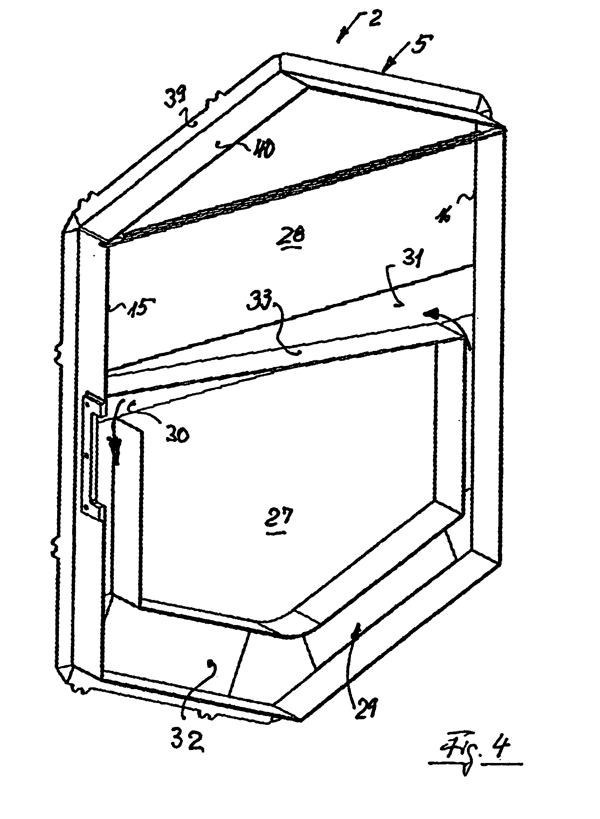

- Fig. 4: eine der Fig. 3 ähnliche und weiter vereinfachte Darstellung, in der die der Baueinheit zugehörigen Abgasnachbehandlungseinheiten nicht dargestellt sind,
- Fig. 5: eine der Fig. 2 entsprechende Darstellung einer Baueinheit, wobei stirnseitig überdeckend zu den Rändern des Rahmens dieser Baueinheit und den Funktionselementen derer Abgasnachbehandlungseinheiten eine Mattenabdeckung vorgesehen ist,
- Fig. 6: eine teilgeschnittene Darstellung ähnlich jener in Fig. 3, wobei anstelle der in Fig. 3 rahmenseitig vorgesehenen, auf eine rahmenseitige Überleitungsverbindung ausmündenden Dosiereinheit eine Wartungseinheit veranschaulicht ist,
- Fig. 7 und 8: eine weitere schematische Darstellung einer Baueinheit mit Veranschaulichung der als Oxidationskatalysator, Partikelfilter und Stickoxid-Katalysator ausgebildeten Abgasnachbehandlungseinheiten,
- Fig. 9: in Explosionsdarstellung eine Mattenanordnung zwischen in einer Zeile angeordneten, gleichartigen Funktionselementen einer Abgasnachbehandlungseinheit,
- Fig. 10: eine vereinfachte Teildarstellung einer Baueinheit, in der der Übergang der Überleitungsverbindung auf die den nicht dargestellten SCR-Katalysator aufnehmende Kammer mit ihren der gleichmäßigen Aufteilung des Abgasstromes auf die Funktionselemente dienenden Lochblechen veranschaulicht ist,
- Fig. 11 bis 13: verschiedene Darstellungen einer Mattenanordnung, die im Übergang zwischen den Funktionselementen des SCR-Katalysators angeordnet ist und die mit einer tragenden Zugverspannung verbundene Mattenträger aufweist,
- Fig. 14: eine vergrößerte Ausschnittsdarstellung des Anschlusses einer auf die Überleitungsverbindung vom Rußfilter zum SCR-Katalysator ausmündenden Dosiereinheit mit in der Überleitungsverbindung vorgesehenem Verwirbelungseinsatz,
- Fig. 15 und 16: Darstellungen einer Mattenanordnung für zwischen aufeinander folgenden Baueinheiten liegende, mit einem Mattenträger verbundenen Fasermatten,
- Fig. 17: eine isolierte perspektivische Darstellung eines in den Fig. 15 und 16 veranschaulichten Mattenträgers mit einem Kantenschutz für zum Mattenträger vorgesehene Auflagen, insbesondere Fasermatten, im Bereich derer den Abgassammelkanälen im Querschnitt entsprechenden Ausschnitte, wobei der Kantenschutz durch bandförmige Einlagen, insbesondere in Bügelform, gebildet ist und bezogen auf den jeweiligen Abgassammelkanal ein Überbrückungsglied zwischen aufeinander folgenden Rahmen von Baueinheiten bildet,
- Fig. 18: eine ausschnittsweise, der Fig. 4 weitgehend entsprechende Schnittdarstellung zu Fig. 5 mit in der rahmenseitigen Überleitungsverbindung vom Partikelfilter zum SCR-Katalysator ausgebildeter Mischstrecke, und
- Fig. 19: eine vereinfachte und schematisierte Darstellung einer Spannvorrichtung, mit deren Hilfe eine jeweilige Abgasnachbehandlungseinheit in den Rahmen der zugehörigen Baueinheit einzusetzen ist.

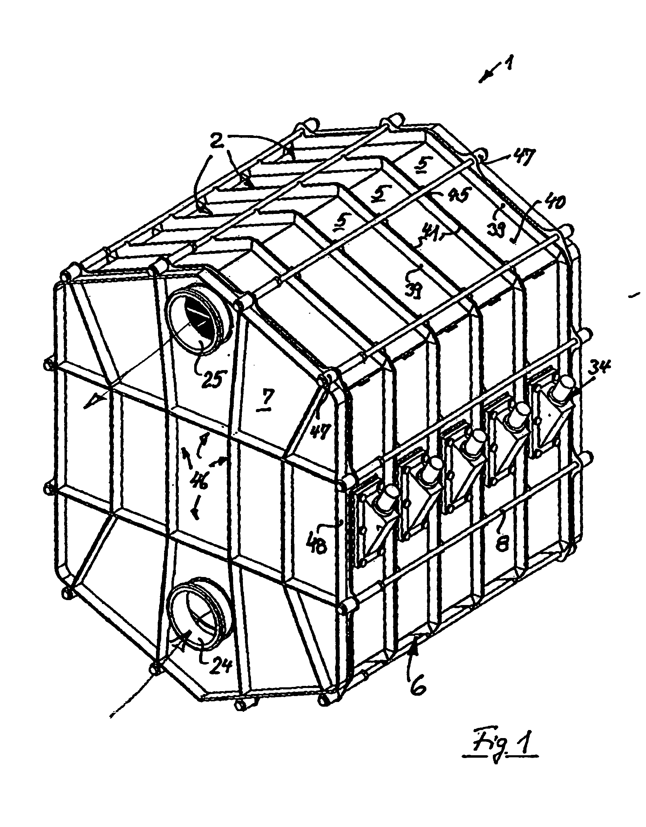

Fig. 1 zeigt in perspektivischer Gesamtansicht eine Abgasnachbehandlungsanlage 1, die insbesondere für einen Einsatz in Verbindung mit Brennkraftmaschinen, und hier vor allem den Einsatz in Verbindung mit großvolumigen, stationär oder instationär genutzten Dieselmotoren vorgesehen ist.

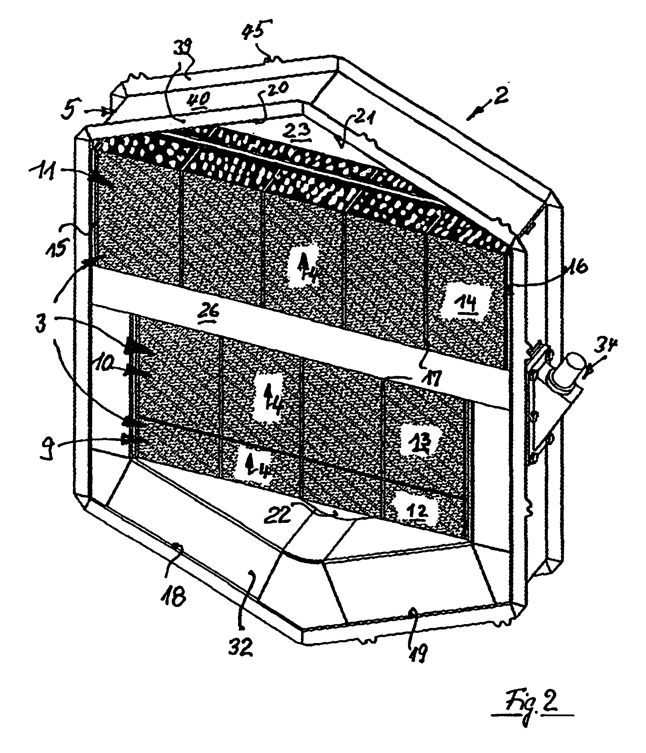

Die Abgasanlage 1 ist modular aus scheibenförmigen Baueinheiten 2 aufgebaut, die, wie in Fig. 2 generell veranschaulicht, vom Abgas durchströmte Abgasnachbehandlungseinheiten 3 aufweist, welche in Richtung der Scheibenebene durchströmt sind. Im gezeigten Ausführungsbeispiel sind die Abgasnachbehandlungseinheiten 3 sämtlich richtungsgleich durchströmt und die Durchströmungsrichtung 4 ist durch entsprechende Pfeile symbolisiert.

Jede der im Ausführungsbeispiel gleich aufgebauten scheibenförmigen Baueinheiten 2 weist einen umschließenden Rahmen 5 auf, der, bezogen auf die Darstellung in Fig. 1, einen Teil der Kapsel 6, und damit des durch die Rahmen 5 der Baueinheiten 2 gebildeten Gehäuses bildet, das bei quer zur Scheibenebene aufeinander folgend angeordneten Rahmen 5 endseitig über Deckelteile 7 geschlossen ist. Über gegen die Deckelteile 7 abgestützte Zuganker 8 sind die scheibenförmigen Baueinheiten 2 zusammengespannt.

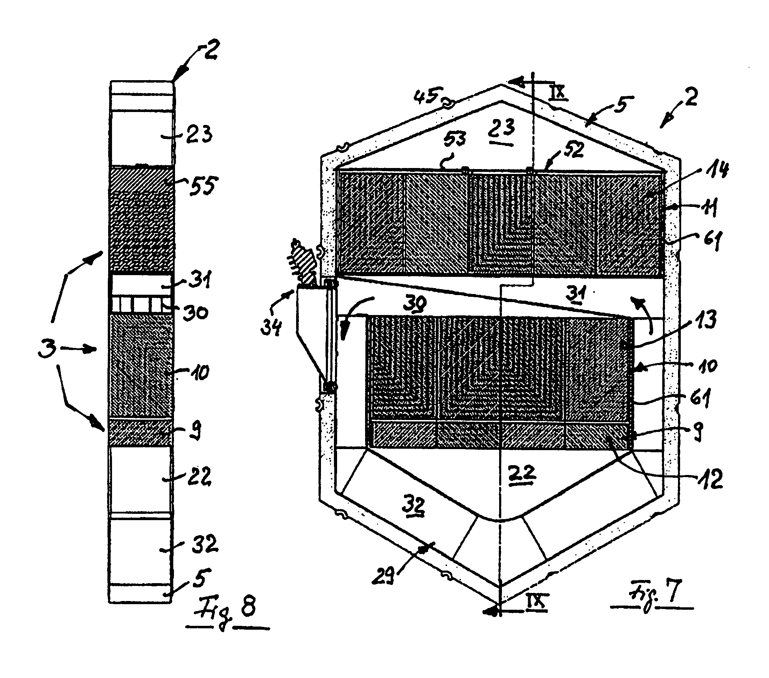

Wie aus Fig. 2, und weiterhin insbesondere aus den Fig. 7 und 8 ersichtlich, sind die scheibenförmigen Baueinheiten 2 mit Abgasnachbehandlungseinheiten 3 versehen, die im Ausführungsbeispiel durch einen Oxidationskatalysator 9, einen Partikelfilter 10 und einen Stickoxid-Katalysator 11 in der Ausgestaltung als sogenannter SCR-Katalysator gebildet sind. Dieser arbeitet mit Harnstoff als Reduktionsmittel. Der Harnstoff wird entsprechend dosiert dem Abgas im Übergang vom Partikelfilter 10 auf den Stickoxid-Katalysator 11 zerstäubt zugeführt. Gegebenenfalls wird der Harnstoff über einen zur Dosiereinheit 34 nachgeordneten Hydrolysekatalysator aufgespalten und das so entstandene Ammoniak dem Abgas insbesondere im Übergang vom Partikelfilter 10 auf den Stickoxid-Katalysator 11 zugeführt.

Aufgebaut sind die jeweiligen Abgasnachbehandlungseinheiten 3 aus Funktionselementen 12 bis 14, die durch vorzugsweise keramische oder metallische Substrate gebildet sind und eine für eine Anordnung in Zeilen geeignete Form aufweisen. Im dargestellten Ausführungsbeispiel sind die Substrate in Form rechteckiger Blöcke gestaltet, die zwischen den parallelen, in Durchströmungsrichtung 4 sich erstreckenden Seiten 15, 16 des Rahmens 5 liegen und zwischen diesen Seiten 15, 16 eingespannt sind. Im Übergang zwischen in Spannrichtung nebeneinander liegenden Funktionselementen 12 bzw. 13 bzw. 14 sowie auch zwischen den zu den Rahmenseiten 15, 16 benachbarten Funktionselementen und diesen Rahmenseiten 15, 16 sind jeweils als Zwischenlagen Keramikfasermatten 17 vorgesehen, über die die jeweils blockartigen Funktionselemente 12 bzw. 13 bzw. 14 gegeneinander und gegenüber den Rahmenseiten 15, 16 elastisch abgestützt sind. Bevorzugt sind die Zwischenlagen, hier veranschaulicht Keramikfasermatten 17, auch gasdicht, so dass sich entsprechend den Querschnitten der insbesondere keramischen Funktionselemente 12 bzw. 13 bzw. 14 jeweils kaminartige, gegeneinander abgegrenzte Durchströmungsquerschnitte ergeben.

Entsprechend der sechseckförmigen Umfangskontur der Kapsel 6, und damit auch der Rahmen 5, ergeben sich zwischen den anströmseitig und abströmseitig liegenden Funktionselementen 12 des Oxidationskatalysators 9 und den Funktionselementen 14 des Stickoxid-Katalysators 11 sowie den jeweils dachförmig überdeckenden, die in Durchströmungsrichtung 4 parallelen Rahmenseiten 15, 16 verbindenden Rahmenseiten 18, 19 bzw. 20, 21 Freiräume, die als für die Abgasnachbehandlungsanlage 1 den modularen, scheibenförmigen Baueinheiten 2 gemeinsame Abgassammelkanäle 22, 23 genutzt sind. Der Abgassammelkanal 22 bildet den anströmseitigen und der Abgassammelkanal 23 den abströmseitigen Sammelkanal. Den Sammelkanälen 22, 23 sind seitens zumindest eines der Deckelteile, im Ausführungsbeispiel dem in Fig. 1 sichtbaren, frontseitigen Deckelteil 7 entsprechende Versorgungsanschlüsse 24, 25 zugeordnet. Der Querschnitt der Abgassammelkanäle 22, 23 lässt sich durch den Öffnungswinkel zwischen den jeweiligen dachförmig gegeneinander geneigten Rahmenseiten 18, 19 bzw. 20, 21 festlegen, der im Ausführungsbeispiel bei etwa 140° liegt, so dass sich für den jeweiligen Abgassammelkanal 22 bzw. 23 bei rechtwinklig zu den Rahmenseiten 15, 16 sich erstreckenden Abgasnachbehandlungseinheiten 3 ein stumpfwinklig dreiecksförmiger Querschnitt ergibt.

Im Hinblick auf die Einspannung der blockartigen Funktionselemente 12 bis 14 zwischen den zur Durchströmungsrichtung 4 parallelen Rahmenseiten 15, 16, die - bezogen auf das Ausführungsbeispiel - im Vergleich zu den dachförmig gegeneinander angestellten Rahmenseiten 18, 19 bzw. 20, 21 verhältnismäßig lang sind und in der Länge etwa dem 1,5- bis 2-fachen dieser dachförmig zueinander stehenden Rahmenseiten 18, 19 bzw. 20, 21 entsprechen, erweist es sich als zweckmäßig, die zur Durchströmungsrichtung 4 parallelen Rahmenseiten 15, 16 über einen Quersteg 26 zu verbinden, der bevorzugt im längsmittleren Bereich der Rahmenseiten 15, 16 liegt und sich im Übergang zwischen dem Partikelfilter 10 und dem Stickoxid-Katalysator 11 erstreckt.

Bei der erfindungsgemäßen Ausgestaltung des Stickoxid-Katalysators 11 als SCR-Katalysator lässt sich dieser Quersteg 26 als trennendes Element zwischen zwei Kammern 27, 28, deren eine Kammer 27 den Oxidationskatalysator 9 und den Partikelfilter 10 und deren andere Kammer 28 den SCR-Katalysator aufnimmt, und als Teil einer Überleitungsverbindung 29 nutzen, über die die aus dem Partikelfilter 10 austretenden Abgase dem SCR-Katalysator 11 nach erfolgter Zudüsung von Harnstoff bzw. Beimengung von Ammoniak zugeleitet werden.

Hierzu ist der Quersteg 26 in zwei Kanalteile aufgeteilt, deren einer Kanalteil 30 gegen den Partikelfilter 10 und deren anderer Kanalteil 31 gegen den SCR-Katalysator 11 offen ist und die über einen zur Kammer 27 umgreifenden rahmenseitigen Verbindungskanal 32 aneinander angeschlossen sind, derart, dass das vom Partikelfilter 10 auf den Kanalteil 30 ausströmende Gas über den rahmenseitigen Verbindungskanal 32 dem gegen den SCR-Katalysator 11 offenen Kanalteil 31 zugeführt wird.

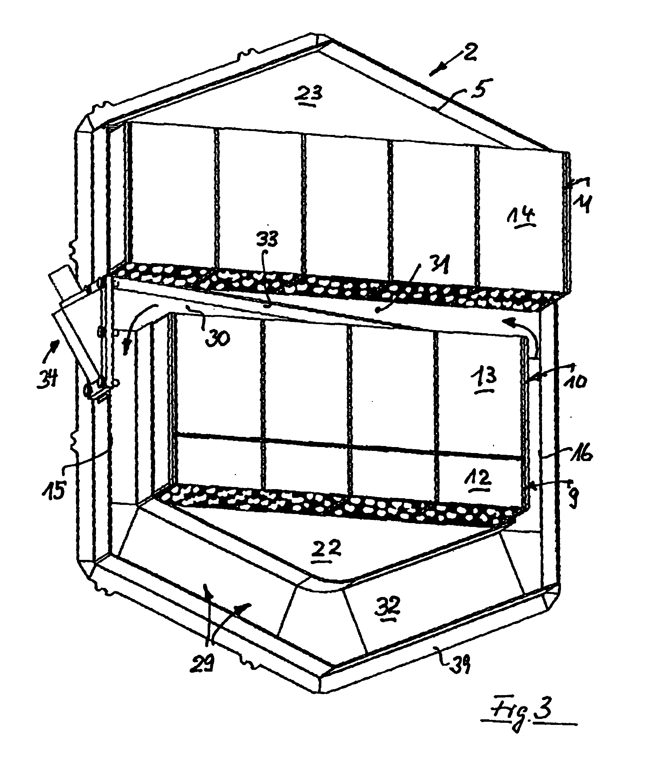

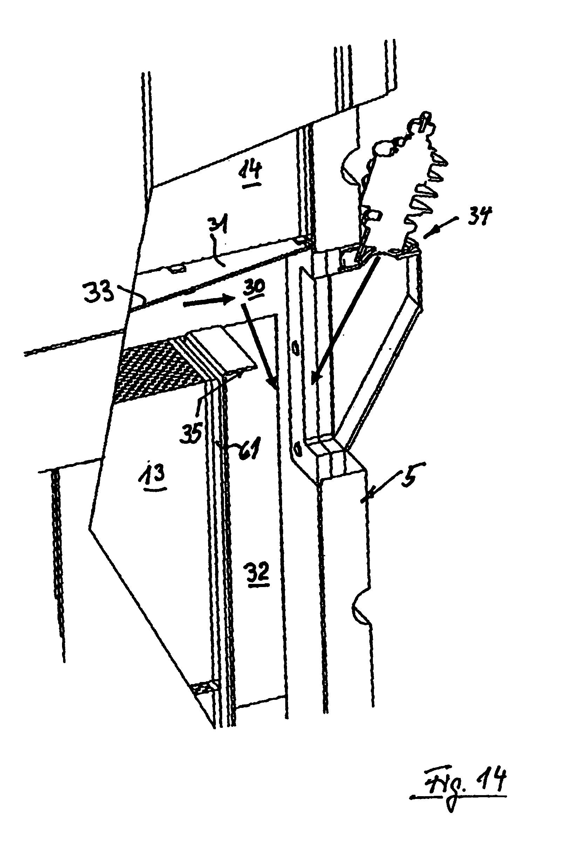

Konstruktiv lässt sich eine Aufteilung des Quersteges 26 in die beiden Kanalteile 30 und 31 in einfacher Weise dadurch erreichen, dass der Quersteg ein H-förmiges Profil aufweist, zwischen dessen parallel zur Scheibenebene verlaufenden Profilschenkeln der Profilsteg 33 als Diagonale verläuft, so dass sich in Richtung der Scheibenebene entgegengesetzt keilförmig verlaufende Kanalteile 30 und 31 rechteckigen Querschnitts ergeben. Ersichtlich ist dies insbesondere auch aus der schematisierten, parallel zur Scheibenebene geschnittenen Darstellung einer Baueinheit 2, die, wie zum Beispiel aus den Fig. 3 und 14 ersichtlich, eine am Rahmen 5 befestigte Dosiereinheit 34 für die Eindüsung von Harnstoff auf die Überleitungsverbindung 29, insbesondere den Verbindungskanal 32 im Bereich des Überganges vom Kanalteil 30, zeigt. Insbesondere in Verbindung mit oder in Zuordnung zur Dosiereinheit 34 kann im Übergang auf die Überleitungsverbindung 29 und die in dieser liegenden Mischstrecke 66 der Hydrolyse-Katalysator vorgesehen sein.

Zweckmäßigerweise ist die Überleitungsverbindung 29 derartig ausgestaltet, dass sich eine gute Vermischung des Harnstoffs bzw. Ammoniaks mit dem dem SCR-Katalysator 11 zugeführten Abgas ergibt, wozu in der Überleitungsverbindung 29 Schikanen, Umleitungen oder dergleichen vorgesehen sein können. Fig. 14 zeigt diesbezüglich eine Spaltverengung im Übergang von dem Kanalteil 30 auf den Verbindungskanal 32 durch einen einkragenden Vorsprung 35, der beispielsweise durch ein Wirbelblech oder dergleichen gebildet ist. Dieses den Vorsprung 35 bildende Wirbelblech ist in Fig. 14 durch einen in den Querschnitt des Verbindungskanals 32 eingebogenen und gegen den Rahmen 5 gerichteten Endabschnitt des Mantels des Verbindungskanales 32 gebildet, der seinerseits zum Rahmen 5 festgelegt und durch einen gegen den Rahmen 5 offenen, U-förmigen Wandungsteil umgrenzt ist, oder auch unmittelbar durch den Rahmen 5 selbst bei entsprechender Ausgestaltung desselben gebildet sein kann.

Die Überleitungsverbindung 29 als solche bietet schon aufgrund ihrer Länge und auch ihres winkligen Verlaufes gute Voraussetzungen für eine "Mischstrecke", also für die Vermischung von Harnstoff bzw. Ammoniak und Abgas.

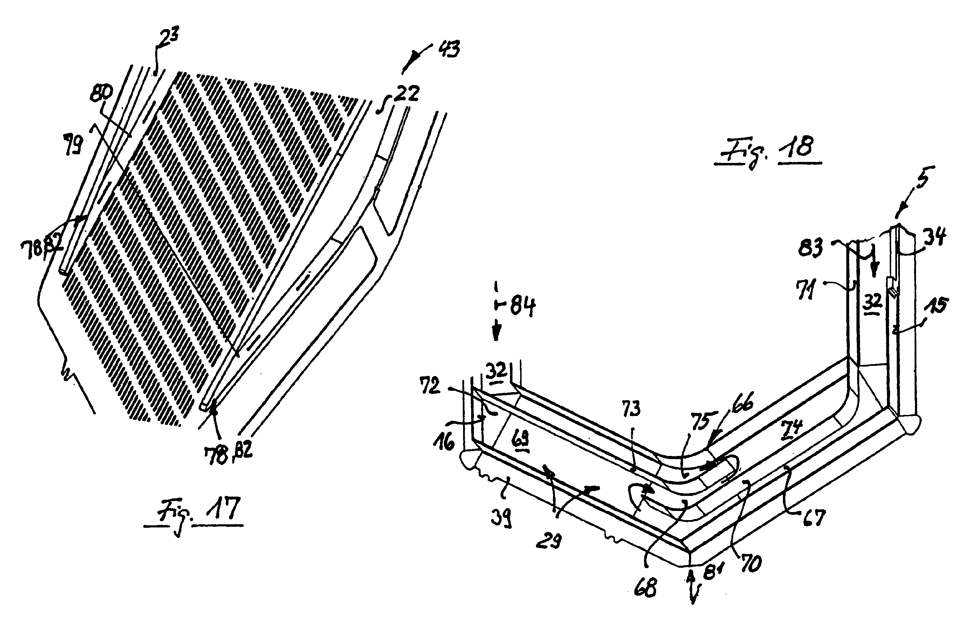

In einer bevorzugten Ausprägung, die in Fig. 18 veranschaulicht ist, ist die Überleitungsverbindung 29 im Bereich des Verbindungskanales 32 speziell im Hinblick auf eine intensive Vermischung von Harnstoff bzw. Ammoniak und Abgas dadurch als Mischstrecke 66 ausgebildet, dass der Verbindungskanal 32 über einen Teil seiner Länge im Querschnitt unterteilt und in gegensinnig durchströmte Kanalabschnitte, insbesondere die Kanalabschnitte 67 und 68 aufgeteilt ist. Die Umlenkung von dem einen Kanalabschnitt 67 auf den anderen Kanalabschnitt 68 erfolgt unter Umkehrung der Durchströmungsrichtung in einem Sammelraum 69, auf den der stromauf liegende Kanalabschnitt 67 ausmündet und von dem der stromab liegende Kanalabschnitt 68 ausgeht. Getrennt sind die Kanalabschnitte 67 und 68 durch den endseitigen, frei auslaufenden Bereich einer Stegwand 70, die einlaufend von der den Funktionselementen 12, 13 zugewandten Innenwand 71 des zur Rahmenseite 16 parallelen Abschnittes des Verbindungskanales 32 ausgeht und den Verbindungskanal 32 zulaufend auf den Sammelraum 69 unterteilt.

Die Stegwand 70 endet bevorzugt im Giebelbereich 81 (Fig. 18) der dachförmigen Umgrenzung des Abgassammelkanales 22, insbesondere in Durchströmungsrichtung jenseits des Giebels, so dass sich im Zulauf auf den Sammelraum 69 ein abgewinkelter Strömungsverlauf ergibt. Diese Richtungsänderung, und insbesondere die nachfolgend beim Übergang auf den in Gegenrichtung durchströmten Kanalabschnitt 68 gegebene Umlenkung der Strömungsrichtung über etwa 180° hat entsprechende zentrifugale Kraftwirkungen auf das Abgas-Harnstoff- bzw. Ammoniak-Gemisch, bestehend aus Abgas, Dampf und gegebenenfalls Tropfen, zur Folge. Insbesondere tropfenförmige Bestandteile des Abgas-Harnstoff- bzw. Ammoniak-Gemisches werden so in den Sammelraum 69 abgeschleudert, verbleiben somit zunächst im Bereich der Mischstrecke 66 des Verbindungskanales 32 und treten damit im Regelfall erst nach ihrer Verdampfung aus der Mischstrecke 66 aus.

Der Sammelraum 69 erstreckt sich bevorzugt bis zur Außenwand 72 des zur Rahmenseite 15 parallelen Abschnittes des Verbindungskanales 32, wobei der Sammelraum 69 durch den zum anströmseitigen Abgassammelkanal 22 abgelegenen, äußeren Querschnittsbereich des Verbindungskanales 32 gebildet ist. Dieser ist über eine Stegwand 73 nach innen in Richtung auf den Abgassammelkanal 22 abgegrenzt. Zur Stegwand 70 weist die Stegwand 73 einen Überlappungsbereich auf und grenzt in diesem Überlappungsbereich den Kanalabschnitt 68 ab, der auf einen Umlenkraum 74, der funktional auch einen Sammelraum bildet, ausläuft. Von diesem Umlenkraum 74 geht, über die Stegwand 73 gegen den Sammelraum 69 und den Kanalabschnitt 68 abgegrenzt, ein abströmseitiger Kanalabschnitt 75 aus, der auf den zur Rahmenseite 15 parallel verlaufenden Bereich des Verbindungskanals 32 ausmündet.

Es ist somit eine Abgasführung mit einer Mischstrecke 66 realisiert, über deren Verlauf sich schon aufgrund ihrer Erstreckung längs des dachförmig verlaufenden Bereiches des Verbindungskanales 32 mehrfache Umlenkungen mit entsprechenden Mischeffekten ergeben. Diese werden dadurch verstärkt, dass eine Aufteilung des Querschnittes des Verbindungskanales 32 im Bereich der Mischstrecke 66 in mehrere Kanalabschnitte 67, 68, 75 erfolgt, von denen in Durchströmungsrichtung aufeinander folgende jeweils in entgegengesetzten Richtungen durchströmt werden, so dass sich haarnadelförmige Umlenkbereiche ergeben, und zwar im Bereich eines Sammelraumes 69 und/oder eines Umlenkraumes 74. Da die über der Mischstrecke 66 entgegengesetzt durchströmten Kanalabschnitte 67, 68, 75 bei im Wesentlichen gleichbleibenden Querschnitt des Verbindungskanales 32 über der Mischstrecke 66 realisiert sind, ist insbesondere über der Mischstrecke 66 aufgrund der unterschiedlichen Querschnitte der Kanalabschnitte und der Sammel- bzw. Umlenkräume auch eine unterschiedliche Durchströmungsgeschwindigkeit gegeben, was sich auf die entsprechende Aufbereitung des Abgas-Harnstoff- bzw. Ammoniak-Gemisches vorteilhaft auswirkt, ohne dass damit, wie die Darstellung gemäß Fig. 18 veranschaulicht, der bauliche Aufwand wesentlich beeinflusst würde.

Im Rahmen der Erfindung liegt auch eine Ausbildung der Überleitung 29 mit einer zur Fig. 18 umgekehrten Anbindung der Mischstrecke 66 an den zum Partikelfilter 10 abströmseitigen Kanalteil 30, so dass das Abgas nicht, wie in Fig. 18, in Richtung des Pfeiles 83 auf den Kanalabschnitt 67 einströmt, sondern in Richtung des strichlierten Pfeiles 84 auf den Kanalabschnitt 75, womit sich über der Mischstrecke 66 eine zu den in Fig. 18 eingetragenen Richtungspfeilen entgegengesetzte Durchströmung ergibt. Dies kann fallweise, z.B. im Hinblick auf die Temperaturverteilung in und um die Abgasnachbehandlungsanlage unter Umständen erwünscht sein.

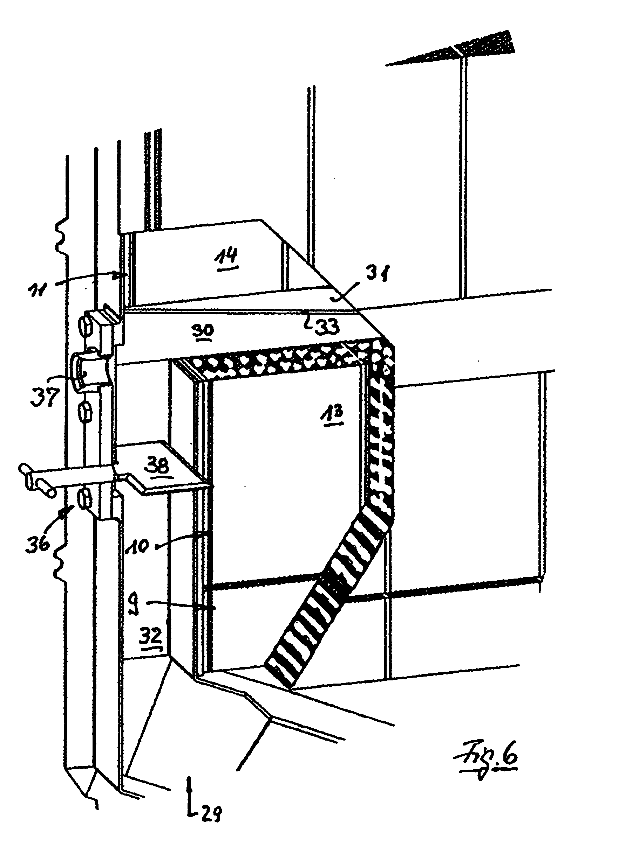

Fig. 6 veranschaulicht in einer der Fig. 14 ähnlichen Schnittdarstellung den Anschluss einer im Wesentlichen nur über ihre Befestigung zum Rahmen 5 angedeutete Wartungseinheit 36 anstelle der Dosiereinheit 34, wobei die Wartungseinheit 36 einen Druckluftanschluss 37 sowie auch eine Sperrklappe 38 umfasst. In ihrer in Fig. 6 gezeigten Sperrstellung sperrt die Sperrklappe 38 den Übergang vom gegen den Partikelfilter 10 offenen Kanalteil 30 zum gegen den SCR-Katalysator 11 offenen Kanalteil 31 im Bereich des Verbindungskanals 32, so dass bei Druckluftbeaufschlagung über den Druckluftanschluss 37 der in Fig. 6 angedeutete Partikelfilter 10 in Gegenrichtung zur Durchströmung 4 im Arbeitsbetrieb durchgeblasen und somit gereinigt wird, wie angedeutet.

Entsprechend der Wartungseinheit 36 oder der Dosiereinheit 34 kann auch ein Hydrolyse-Katalysator vorgesehen bzw. angeordnet sein, über den Ammoniak auf die Überleitungsverbindung 29, insbesondere den Verbindungskanal 32 eingespeist wird.

Im Rahmen der Erfindung liegt es, die Wartungseinheit 36 mit der Dosiereinheit 34 und/oder dem Hydrolyse-Katalysator zu einer Arbeitseinheit zu verbinden, so dass für die Wartung keine Umbaumaßnahmen erforderlich sind. Die Sperrklappe 38 kann bei einer solchen Konstruktion eine Ausbildung erfahren, die stellungsabhängig ihre Nutzung für die Verwirbelung und Vermischung des eingedüsten Harnstoffes mit dem Abgas im Normalbetrieb ermöglicht.

Beispielsweise die Fig. 1 und 2 veranschaulichen die Ausbildung der Rahmen 5 der scheibenförmigen Baueinheiten 2 mit nach außen aufgestellten Rändern 39, so dass die jeweiligen Rahmenseiten sich als zur Rahmenaußenseite offene U-förmige Profile mit zwischen den Rändern 39 liegenden, sich quer zur Scheibenebene erstreckenden Stegen 40 darstellen. Damit weisen die Rahmen 5 eine Ausbildung auf, die in vorteilhafter Weise und mit geringem Aufwand auch in Blechbauweise bei geringem Schweißaufwand gefertigt werden kann, so beispielsweise aus Bandmaterial. Die zum Beispiel durch Abkantung aufgestellten Ränder 39 bilden auch Versteifungsrippen, so dass mit verhältnismäßig geringen Materialstärken gearbeitet werden kann.

In der modular zusammengefügten Abgasnachbehandlungsanlage 1 sind die scheibenförmigen Baueinheiten 2 über ihre Ränder 39 gegeneinander abgestützt, wobei erfindungsgemäß zwischen den Rändern 39 aufeinander folgender Baueinheiten 2 eine elastische und dichtende Zwischenlage 41 vorgesehen ist. Diese Zwischenlage 41 ist erfindungsgemäß wiederum bevorzugt durch einen Streifen einer Fasermatte 17 gebildet.

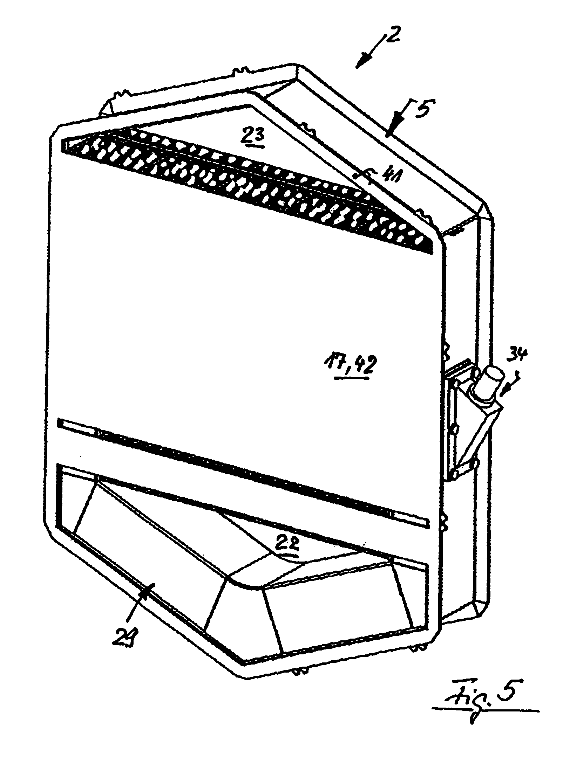

Fig. 5 veranschaulicht, dass im Rahmen der Erfindung die zwischen den Rändern 39 als Zwischenlage 41 liegenden Streifen durch Randzonen von Fasermatten gebildet sind, wie für eine Fasermatte 17 als zur Scheibenebene parallele, die Baueinheit 2 im Bereich der Abgasnachbehandlungseinheiten 3 und der Ränder 39 überdeckende Auflage 42 dargestellt.

Die insbesondere durch eine Fasermatte gebildete Auflage 42 bildet im Bereich der Ränder 39 als Zwischenlage 41 einen quer zur Spannrichtung der Zuganker 8 elastischen Dichtstreifen und zudem auch im Bereich der flächigen Überdeckung zu den Abgasnachbehandlungseinheiten 3 eine gasdichte Abgrenzung zwischen aufeinander folgenden Baueinheiten 2, welche im Überdeckungsbereich der Abgassammelkanäle 22, 23 ausgespart ist.

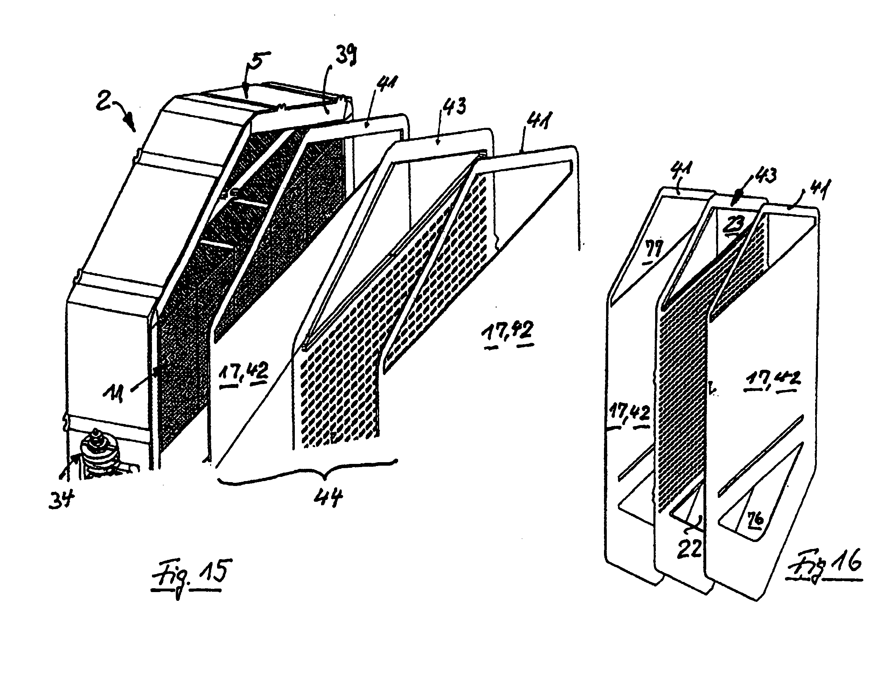

In zweckmäßiger Ausgestaltung dieses Grundkonzeptes kann gemäß Fig. 15 und 16 anstelle einer Zwischenlage 41 und Auflage 42 bildenden Fasermatte 17 auch eine Mattenanordnung 44 mit einem Mattenträger 43 vorgesehen sein, der flächig ausgebildet ist und entsprechend den Fasermatten eine randseitige Zwischenlage 41, und von dieser umschlossen, eine in Überdeckung zu den Abgasnachbehandlungseinheiten 3 liegende, der Auflage 42 entsprechende Fläche aufweist. Im Bereich dieser Fläche 42 ist der Mattenträger 43 bevorzugt gelocht oder anderweitig strukturiert ausgebildet.

Bevorzugt bildet der Mattenträger 43 zusammen mit den überdeckenden Fasermatten - oder auch anderen in entsprechender Weise elastischen und abdichtenden Abdeckungen - eine Baueinheit, ähnlich einer Zylinderkopfdichtung, die insgesamt zwischen jeweils nebeneinander liegende Baueinheiten 2 eingebracht und zwischen diesen eingespannt werden kann. Insbesondere in Verbindung mit einer derartigen, über Mattenträger 43 ausgesteiften Mattenanordnung 44, für die auch Mattenträger 43 anderen Aufbaus in Frage kommen, ergibt sich auch bei größeren Abgasnachbehandlungsanlagen 1 eine hohe Querstabilität durch die wechselseitige Abstützung der Baueinheiten 2 gegeneinander. So kann auch unter schwierigen Bedingungen, wie Schwingungsbelastungen, Stoßbelastungen bei Einsatz in Fahrzeugen oder dergleichen, die Formhaltigkeit in der Abgasnachbehandlungsanlage 1 bei lediglich axialer Verspannung der Baueinheiten 2 gegeneinander über die deckelseitig abgestützten Zuganker 8 gewährleistet werden. Die Zuganker 8 sind axial lediglich gegen die Deckelteile 7 abgestützt und durchsetzen bei dem gezeigten Ausführungsbeispiel die zusammengespannten Baueinheiten 2 nicht. Zweckmäßigerweise erstrecken sich die Zuganker 8 über die Baueinheiten 2, gegebenenfalls - wie gezeigt - bei seitlicher Abstützung der Zuganker 8 gegen die Baueinheiten 8 über Böckchen 45, die zweckmäßigerweise durch an den Rändern 39 vorgesehene und über diese auskragende Vorsprünge gebildet sind, wie zum Beispiel aus Fig. 1 und Fig. 2 ersichtlich.

Fig. 5 sowie auch Fig. 15 und 16 veranschaulichen Keramikfasermatten 17, die als Auflagen 42 zwischen Rahmen 5 und Funktionselementen 12, 14 aufeinander folgender und gegeneinander verspannter Baueinheiten 2 - mit oder ohne Mattenträger 43 - eingespannt sind. Die Matten 17 bzw. Auflagen 42 weisen den Querschnitten der Abgassammelkanäle 22, 23 entsprechende Ausschnitte 76, 77 mit zu den Abgassammelkanälen 22, 23 umgrenzenden Kanten auf. Zum Schutz dieser Kanten, zum Beispiel gegen die Beaufschlagung durch in die Funktionselemente 12 einströmende, aus den Funktionselementen 14 ausströmende und/oder in den Abgassammelkanälen 22, 23 strömende Abgase oder-Abgas-Harnstoff- oder Abgas-Ammoniak-Gemische, erweist sich für die Kanten erfindungsgemäß eine Abschirmung oder Abdeckung als zweckmäßig, die auch eine schützende Überbrückung 82 im Übergang zwischen aufeinander folgenden Baueinheiten 2 bildet.

Eine solche überbrückende Abdeckung kann seitens der Rahmen 5, oder bezogen auf Ausgestaltungen gemäß Fig. 15 und 16, auch seitens der Mattenträger 43 vorgesehen werden, wie in Fig. 17 in Zuordnung zu einem Mattenträger 43 schematisiert veranschaulicht. In Anbetracht der bezogen auf die Dicke der scheibenförmigen Baueinheiten 2 und die entsprechende, quer zur Scheibenebene gemessene Breite der Rahmen weisen die im Kantenbereich gefährdeten Fasermatten 17 nur eine geringe Dicke auf und es sind dementsprechend auch nur schmale Überdeckungen zur Abschirmung erforderlich.

Diese können, bei Festlegung gegenüber den Rahmen 5 durch bandförmige Einlagen 78, insbesondere schmale Bänder gebildet sein, die - wie aus Fig. 17 ersichtlich - bevorzugt in Form eines der Kontur der Abgassammelkanäle 22, 23 folgenden Bügels geformt sind, der mit seinen zueinander dachförmig stehenden Bügelseiten gegen die entsprechenden Rahmenseiten 18, 19 bzw. 20, 21 festgelegt ist und mit seiner gegenüberliegenden langen Seite, gegebenenfalls über in Richtung der Scheibenebene verlaufende Abstützungen ausgesteift, überdeckend zur längs der Funktionselemente 12, 14 sich erstreckenden Kante der Fasermatte 17 verläuft.

Bezogen auf Lösungen gemäß Fig. 15 und 16 mit einem Fasermattenträger 43 kann dieser, wie in Fig. 17 veranschaulicht, umschließend zum dem jeweiligen Abgassammelkanal 22, 23 entsprechenden Ausschnitt 76, 77 (Fig. 16) eine bandförmige Einlage 78 (Fig. 17) aufweisen, die, entsprechend den der Dreiecksform des Abgassammelkanals 22, 23 folgenden Ausschnitten 76, 77, als dreiecksförmiger Bügel 79, 80 gestaltet ist.

Der flächige, insbesondere aus Blech gefertigte Mattenträger 43, bildet bei dieser Lösung - in Analogie zu einem T-Profil - den Tragsteg, an dem die bandförmige, zu einem Bügel 79 bzw. 80 gebogene Einlage als Flansch angebracht ist. Entsprechend kragt die bandförmige Einlage 78 in der Breite über den flächigen Mattenträger 43 als "Tragsteg" beidseitig aus, und übergreift damit die den jeweiligen Ausschnitt 76, 77 umgrenzenden Kanten der am Mattenträger 43 als Auflagen 42 vorgesehen Fasermatten.

Der durch ein Band, so insbesondere ein Flachmaterial, gebildete Bügel 79, 80 kann bei einer solchen Lösung insbesondere durch Schweißung in einfacher Weise zum Mattenträger 43 festgelegt sein. Im Rahmen der Erfindung liegen aber auch andere Ausgestaltungen, die in entsprechender Weise eine Überdeckung der zu den Abgassammelkanälen 22, 23 ansonsten freiliegenden Kanten der Auflagen 42 bilden, die bevorzugt durch Fasermatten, vor allem keramische Fasermatten gebildet sein können. Im Rahmen der Erfindung liegt es aber auch, Auflagen 42 anderen Aufbaus zu verwenden, sofern die Auflagen in der Funktion den Fasermatten entsprechenden, so zumindest im Wesentlichen gasdicht sowie in Verspannrichtung der Baueinheiten 2 elastisch nachgiebig sind.

In Verbindung mit einer bandförmigen, insbesondere in Form eines Bügels 79 bzw. 80 gestalteten Einlage 78 bildet die Einlage 78, bezogen auf eine montierte Abgasnachbehandlungsanlage 1, ein Überbrückungsglied zwischen aufeinander folgenden Baueinheiten 2, so dass sich der jeweilige Abgassammelkanal 22, 23 nach außen als durch die Rahmen 5 der Baueinheiten 2 und die überbrückenden, bandförmigen Einlagen 78 begrenzt darstellt.

Dies in entsprechender Weise auch, wenn die bandförmigen Einlagen 78, was nicht gezeigt ist, an den Rahmen 5 und seitlich quer zur Rahmenebene so weit über diese auskragend festgelegt sind, dass sich eine Überdeckung zu den zwischen aufeinander folgenden Rahmen 5 liegenden Matten ergibt. In einfacher Weise können die bandförmigen Einlagen 79 hierzu auch randseitig zu den Rahmen 5 auskragend gegen deren Innenumfang festgelegt, insbesondere verschweißt sein, so dass sich auch auf diese Weise eine jeweilige Überbrückung zwischen den Rahmen 5 aufeinander folgender Baueinheiten ergibt.

Fig. 1 zeigt des Weiteren auch für die flachen, verhältnismäßig großflächigen Deckelteile 7 eine Verrippungsanordnung 46 mit jeweils auf Augen 47 auslaufenden Rippen. Die Augen 47 sind umfangsseitig zu einer randumschließenden Rippe 48 des jeweiligen Deckelteils 7 vorgesehen und bilden die deckelseitige Abstützung für die Zuganker 8 bilden, die sich quer über die Baueinheiten 2 längs der Abgasnachbehandlungsanlage 1 erstrecken.

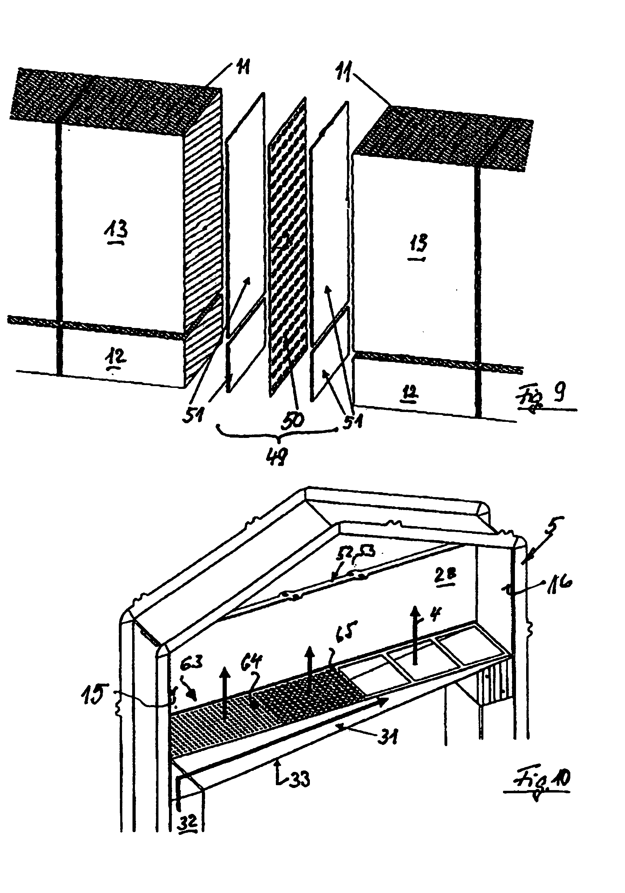

Analog zur Mattenanordnung 44 zwischen aufeinander folgenden Baueinheiten 2 kann, wie in Fig. 9 schematisiert dargestellt, auch zwischen in der Scheibenebene aufeinander folgenden und zwischen den Rahmenseiten 15 und 16 eingespannten blockartigen Funktionselementen 12 bzw. 13 bzw. 14 - nur für die Funktionselemente 12 und 13 veranschaulicht - jeweils eine Mattenanordnung 49 mit einem Mattenträger 50 und beiderseits desselben liegenden Keramikfasermatten 51 vorgesehen werden. Der Mattenträger 50 kann auch vorliegend durch ein Lochblech oder ein anderweitiges flächiges Element mit einer Strukturierung gebildet sein, die der Verankerung der Keramikfasermatten 51 dient. Durch einen solchen Aufbau mit Verspannung zwischen den Rahmenseiten 15, 16 lässt sich in Verbindung mit der Abstützung und Verspannung über die Deckelteile 7 eine weitere Stabilisierung der jeweiligen, aus insbesondere keramischen Substraten als Funktionselementen aufgebauten Abgasnachbehandlungseinheiten 3 erreichen, auch in Berücksichtigung der bei Brennkraftmaschinen pulsierenden Beaufschlagung mit Abgasen und/oder von auf die Abgasnachbehandlungsanlage 1 wirkenden, insbesondere stoßartigen Beschleunigungskräften.

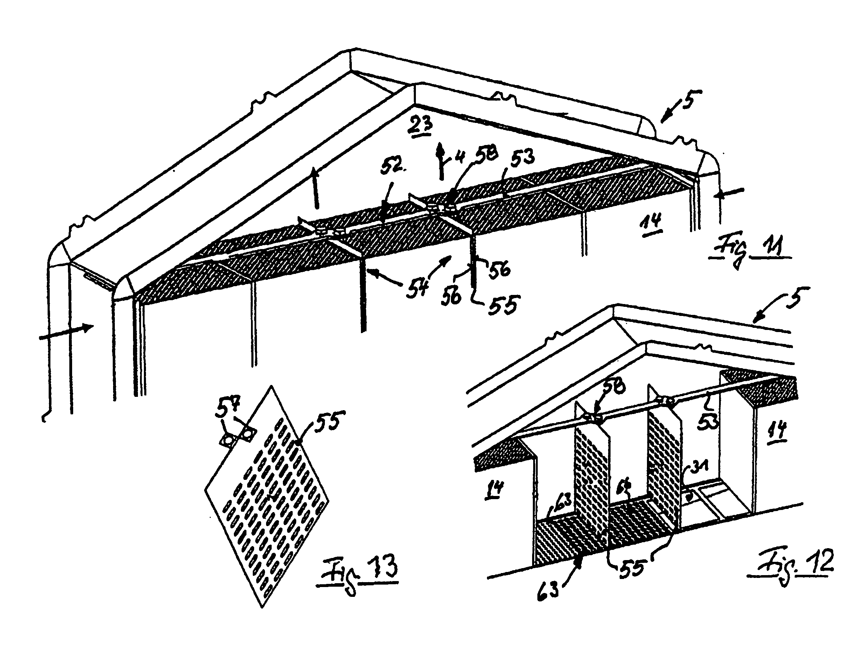

Fig. 11 bis 13 zeigen eine Weiterbildung dieses Prinzips, die insbesondere bei größeren Spannweiten der in Richtung der Scheibenebene zwischen den Rahmenseiten 15, 16 eingespannten Abgasnachbehandlungseinheiten 3 zweckmäßig sein kann. Eine bei dieser Ausgestaltung vorgesehene Zugverspannung zwischen den einander gegenüberliegenden Rahmenseiten 15, 16 ist auch von Vorteil, um bei einem möglichst leichten Aufbau des Rahmens 5 ohne Verformung desselben auch relativ große Spannkräfte auf die zwischen den Rahmenseiten 15, 16 eingespannten Funktionselemente, hier die durch keramische oder metallische Substrate gebildeten Funktionselemente 14 des Stickoxid-Katalysators 11 aufbringen zu können.

Die Zugverspannung 52 ist in Fig. 11 veranschaulicht durch einen Flachstab 53, der sich zwischen den Rahmenseiten 15, 16 erstreckt und gegenüber diesen verankert ist, wobei der Flachstab 53 mit seinen Flachseiten quer zur Durchströmungsrichtung 4 liegt und damit in Durchströmungsrichtung 4 auch eine gewisse Nachgiebigkeit aufweist.

Fig. 11 bis 13 veranschaulichen weiter eine Mattenanordnung 54 zwischen den zwischen den Rahmenseiten 15, 16 eingespannten, Funktionselemente 14 des Stickoxid-Katalysators 11 bildenden druckempfindlichen Substraten mit Mattenträgern 55 und gegen die Mattenträger 55 beidseitig anliegenden Keramikfasermatten 56 als elastischen Zwischenlagen, die über den Mattenträger 55 stabilisierend verbunden sind, so dass über die insbesondere in Fig. 12 veranschaulichte Verbindung der Mattenträger 55 mit dem Flachstab 53 zusätzlich eine tragende Abstützung für die Funktionselemente 14 erreicht ist. Zur Verbindung mit dem Flachstab 53 sind die Mattenträger 55 an ihrer dem Flachstab 53 zugewandten Stirnseite mit ausgestellten Laschen 57 versehen, über die die Mattenträger 55 beispielsweise durch Schraubverbindungen 58 zum Flachstab 53 festzulegen sind.

Eine solch lösbare Verbindung der Mattenträger 55 zur durch den Flachstab 53 gebildeten tragenden Zugverspannung 52 erweist sich als zweckmäßig, um die Funktionselemente, hier die Funktionselemente 14 verspannend in den geschlossenen Rahmen zwischen dessen Rahmenseiten 14 und 15 einbringen zu können.

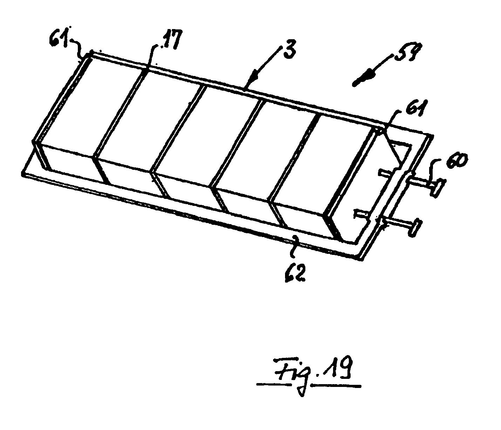

Fig. 19 veranschaulicht ein Spann- und Montageverfahren für elastisch gegeneinander abgestützte Funktionselemente, beispielsweise Funktionselemente 12, die über Keramikfasermatten 17 elastisch gegeneinander abgestützt sind und die zum Einschieben zwischen die Rahmenseiten 15, 16 auf eine Länge zusammengedrückt werden müssen, die kleiner ist als der in Spannrichtung bemessene Abstand zwischen den Rahmenseiten 15, 16.

Die in Fig. 19 veranschaulichte Spannvorrichtung 59 weist einen geschlossenen Spannrahmen 62 auf, der die Funktionselemente der jeweils zwischen die Rahmenseiten 15, 16 einzusetzenden Abgasnachbehandlungseinheit 3 in Spannrichtung umgreift und über entsprechende Spannelemente 60, dargestellt als Spannschrauben, in Spannrichtung beaufschlagt. Hierzu ist das Paket der jeweils eine Abgasnachbehandlungseinheit 3 bildenden Funktionselemente, also beispielsweise der Funktionselemente 12, an den in Spannrichtung einander gegenüberliegenden Seiten jeweils mit einer formsteifen Stützplatte 61 überdeckt, so dass über die Spannelemente 60 das jeweilige Paket von Funktionselementen auf eine Einschublänge zusammengedrückt werden kann, die kleiner ist als der Abstand zwischen den Rahmenseiten 15, 16.

So kann die jeweilige Abgasnachbehandlungseinheit 3 zunächst quer zur Rahmenebene 5 zwischen die Rahmenseiten 15, 16 entsprechend dem Überstand der zusammengedrückten Abgasnachbehandlungseinheit 3 über die Ebene des Spannrahmens 62 in den Rahmen 5 eingeschoben werden und es kann dann aufgrund der so erreichten Abstützung gegen die Rahmenseiten 15, 16, die Spannvorrichtung 59 gelöst werden.

Die formsteifen Stützplatten 61 bilden weiterhin die Abstützung für die dazwischen liegenden, elastisch gegeneinander abgestützten Funktionselemente 12, die nunmehr insgesamt- also als Paket - bei Abstützung über die Stützplatten 62 gegen die Rahmenseiten 15, 16 in den Rahmen 5 eingeschoben werden können, so dass der Rahmen mit den Abgasnachbehandlungseinheiten 3 die gewünschte, scheibenförmige Baueinheit 2 bildet. Im eingeschobenen Zustand kann dann, wie in Verbindung mit Fig. 11 bis 13 angesprochen, die vorgesehene Schraubverbindung 58 zur Zugverspannung 52 hergestellt werden, soweit für die jeweilige Abgasnachbehandlungseinheit eine solche zusätzliche Abstützung gegeben ist.

Insbesondere bei quer zur Durchströmungsrichtung 4 erfolgender Zuführung der Abgase auf die einzelnen Funktionselemente der Abgasnachbehandlungseinheiten 3, so vor allem der blockartigen, jeweils in einer Reihe aufeinanderfolgenden Funktionselemente 12 des Oxidationskatalysators 9 und Funktionselemente 14 des Stickoxid-Katalysators 11 erweist es sich als zweckmäßig, Vorkehrungen zu treffen, um für die jeweiligen Funktionselemente 12 bzw. 14 unabhängig von den jeweiligen Anströmgegebenheiten eine im Wesentlichen massengleiche Beaufschlagung mit Abgas zu erreichen. Hierzu können entsprechende Leiteinrichtungen vorgesehen sein.

Eine im Rahmen der Erfindung bevorzugte und besonders zweckmäßige Lösung besteht darin - wie in Fig. 10 dargestellt, aber auch aus Fig. 12 ersichtlich - in anströmseitiger Überdeckung zu den Funktionselementen eine den Übertrittsquerschnitt auf die Funktionselemente begrenzende Anordnung beispielsweise und insbesondere in Form einer Leitabdeckung 63 vorzusehen, die durch Lochbleche 64 gebildet ist. Die Lochbleche 64 sind zweckmäßigerweise mit Löchern 65, also Durchtrittsöffnungen, versehen, die in ihrer Fläche auf die jeweiligen Anströmverhältnisse abgestimmt sind. So sind die Löcher 65 bezogen auf Fig. 10 im eintrittsseitigen Abschnitt des Kanalteiles 31, in dem die volle Abgasbeaufschlagung gegeben ist, im Lochquerschnitt kleiner als in dem oder den nachfolgenden Bereichen der Leitabdeckung 63, so dass mit einfachen Mitteln eine im Wesentlichen gleiche Beaufschlagung der Funktionselemente erreicht ist, die bezogen auf die Darstellung gemäß Fig. 10 durch die nicht gezeigten, in der Kammer 28 angeordneten Funktionselemente 14 des Stickoxid-Katalysators 11 gebildet sind.

## Patentansprüche

1. Gekapselte Abgasnachbehandlungsanlage (1), die kapselseitige Versorgungsanschlüsse (24, 25) aufweist und modular aus scheibenförmigen Baueinheiten (2) aufgebaut ist, welche quer zur Scheibenebene aufeinander folgend miteinander verbunden sind und in Richtung der Scheibenebene durchströmte Abgasnachbehandlungseinheiten (3) aufweisen, die bezogen auf die in Richtung der Scheibenebene verlaufende Durchströmungsrichtung der Baueinheiten (2) zwischen Sammelkanälen (22, 23) liegen, welche in die Baueinheiten (2) integriert sind, sich quer zu den Scheibenebenen über die Baueinheiten (2) durchlaufend erstrecken und gegen die Versorgungsanschlüsse (24, 25) offen sind,
**dadurch gekennzeichnet,**
**dass** die Abgasnachbehandlungseinheiten (3).einer Baueinheit (2) aus blockartigen Funktionselementen aufgebaut sind, die zeilenförmig quer zur Durchströmungsrichtung in der Scheibenebene aufeinander folgend angeordnet sind.

2. Abgasnachbehandlungsanlage nach Anspruch 1,
**dadurch gekennzeichnet,**
**dass** in den Baueinheiten (2) Abgasnachbehandlungseinheiten (3) unterschiedlicher Funktion in Durchströmungsrichtung hintereinander angeordnet sind.

3. Abgasnachbehandlungsanlage nach Anspruch 1 oder 2,
**dadurch gekennzeichnet,**
**dass** die Baueinheiten (2) gekammert ausgebildet sind und jeweils eine anströmseitige Kammer (27) sowie eine abströmseitige Kammer (28) aufweisen, die als Funktionselemente (12 bis 14) Abgasnachbehandlungseinheiten (3) unterschiedlicher Funktion aufnehmen und über eine Überleitung (29) verbunden sind.

4. Abgasnachbehandlungsanlage nach einem der vorhergehenden Ansprüche,
**dadurch gekennzeichnet,**
**dass** die einer Baueinheit (2) zugeordneten Funktionselemente (12 bis 14) einen Oxidationskatalysator (9), einen Partikelfilter (10) und/oder einen Stickoxidkatalysator (11) aufweisen.

5. Abgasnachbehandlungsanlage nach Anspruch 3 oder 4,
**dadurch gekennzeichnet,**
**dass** die anströmseitige Kammer (27) als Funktionselemente (12, 13) den Oxidationskatalysator (9) und den Partikelfilter (12) aufnimmt.

6. Abgasnachbehandlungsanlage nach einem der Ansprüche 3 bis 5,
**dadurch gekennzeichnet,**
**dass** die abströmseitige Kammer (28) als Funktionselement (14) den Stickoxid-Katalysator (11) aufnimmt, der über die Überleitung (29) angeströmt ist.

7. Abgasnachbehandlungsanlage nach Anspruch 6,
**dadurch gekennzeichnet,**
**dass** der Stickoxidkatalysator (11) als SCR-Katalysator ausgebildet ist und über die Überleitungsverbindung (29) an eine Harnstoffzuführung, insbesondere in Form einer Dosiereinheit (34), und/oder an einen insbesondere einer Dosiereinheit (34) nachgeordneten Hydrolyse-Katalysator angeschlossen ist.

8. Abgasnachbehandlungsanlage nach einem der vorhergehenden Ansprüche,
**dadurch gekennzeichnet,**
**dass** eine jeweilige Baueinheit (2) einen einen Teil der Kapsel bildenden Rahmen (5) aufweist und die Überleitung (29) zumindest teilweise durch im Rahmen (5) oder längs des Rahmens (5) verlaufende Kanäle (30 bis 32) gebildet ist.

9. Abgasnachbehandlungsanlage nach Anspruch 6 oder 8,
**dadurch gekennzeichnet,**
**dass** die Überleitung (29) umgreifend zur anströmseitigen Kammer (27) vorgesehen ist.

10. Abgasnachbehandlungsanlage nach einem der Ansprüche 3 bis 9,
**dadurch gekennzeichnet,**
**dass** die anströmseitige Kammer (27) von der abströmseitigen Kammer (28) über einen Quersteg (26) des Rahmens (3) getrennt ist, der zwischen von der anströmseitigen Kammer (27) ausgehenden und auf die abströmseitige Kammer (28) ausmündenden Kanalteilen (30, 31) der Überleitung (29) liegt.

11. Abgasnachbehandlungsanlage nach einem der Ansprüche 9 oder 10,
**dadurch gekennzeichnet,**
**dass** die Überleitung (29) einen Verbindungskanal (32) umfasst, der zwischen den durch einen Steg (33) getrennten Kanalteilen (30, 31) zur anströmseitigen Kammer (27) umfangsseitig umgreifend verläuft.

12. Abgasnachbehandlungsanlage nach einem der Ansprüche 6 bis 11,
**dadurch gekennzeichnet,**
**dass** die Überleitung (29) einen Anschluss für eine Wartungseinheit (36) aufweist.

13. Abgasnachbehandlungsanlage nach einem der Ansprüche 6 bis 12,
**dadurch gekennzeichnet,**
**dass** die Dosiereinheit (34) und die Wartungseinheit (36) austauschbar angeordnet und/oder als Baueinheit ausgebildet sind.

14. Abgasnachbehandlungsanlage nach einem der Ansprüche 7 bis 13,
**dadurch gekennzeichnet,**
**dass** die Überleitung (29) als Mischstrecke (66) ausgebildet ist.

15. Abgasnachbehandlungsanlage nach Anspruch 14,
**dadurch gekennzeichnet,**
**dass** die Überleitung (29) im Bereich des Verbindungskanales (32) als Mischstrecke (66) ausgebildet ist.

16. Abgasnachbehandlungsanlage nach einem der Ansprüche 3 bis 15,
**dadurch gekennzeichnet,**
**dass** die quer zur Durchströmungsrichtung (4) in der Scheibenebene aufeinander folgenden Funktionselemente (12 bis 14) blockartig ausgebildet.

17. Abgasnachbehandlungsanlage nach einem der Ansprüche 3 bis 16,
**dadurch gekennzeichnet,**
**dass** die in der Scheibenebene einer Baueinheit (2) quer zur Durchströmungsrichtung aufeinander folgenden Funktionselemente (12 bis 14) über Zwischenlagen gegeneinander abgestützt sind.

18. Abgasnachbehandlungsanlage nach einem der Ansprüche 3 bis 17,
**dadurch gekennzeichnet,**
**dass** die Funktionselemente aufeinander folgender Baueinheiten (2) quer zur Durchströmungsrichtung der Baueinheiten (2) über Zwischenlagen (41) gegeneinander abgestützt sind.

19. Abgasnachbehandlungsanlage nach Anspruch 18,
**dadurch gekennzeichnet,**
**dass** die einander entsprechenden Funktionselemente (z. B. 12, 12) aufeinander folgender Baueinheiten (2) quer zur Durchströmungsrichtung der Baueinheiten (2) über die Zwischenlagen (41) gegeneinander abgestützt sind.

20. Abgasnachbehandlungsanlage nach einem der Ansprüche 17 bis 19,
**dadurch gekennzeichnet,**
**dass** die Zwischenlagen (z. B. 41) elastisch ausgebildet sind.

21. Abgasnachbehandlungsanlage nach einem der Ansprüche 17 bis 20,
**dadurch gekennzeichnet,**
**dass** die Zwischenlagen (z. B. 41) gasdicht ausgebildet sind.

22. Abgasnachbehandlungsanlage nach einem der Ansprüche 17 bis 21,
**dadurch gekennzeichnet,**
**dass** Fasermatten (17) als Zwischenlagen (z. B. 41) vorgesehen sind.

23. Abgasnachbehandlungsanlage nach einem der Ansprüche 17 bis 22,
**dadurch gekennzeichnet,**
**dass** die Zwischenlagen durch Fasermatten (56) und Fasermattenträger (55) gebildet sind.

24. Abgasnachbehandlungsanlage nach einem der Ansprüche 17 bis 23,
**dadurch gekennzeichnet,**
**dass** durch die Zwischenlagen für in Durchströmungsrichtung (4) aufeinander folgende Funktionselemente (12, 13) kaminartig gegeneinander abgegrenzte Durchströmungswege gebildet sind.

25. Abgasnachbehandlungsanlage nach einem der Ansprüche 17 bis 24,
**dadurch gekennzeichnet,**
**dass** die Funktionselemente (12 bis 14) einer Zeile zwischen einander gegenüberliegenden, sich in Durchströmungsrichtung (4) erstreckenden Seiten des Rahmens (4) eingespannt sind.

26. Abgasnachbehandlungsanlage nach einem der Ansprüche 17 bis 25,
**dadurch gekennzeichnet,**
**dass** jeweils aufeinander folgende Baueinheiten (2) über zwischenliegende Fasermatten (17) im Bereich des Rahmens (5) und der Funktionselemente (12 bis 14) gegeneinander abgegrenzt und abgestützt sind.

27. Abgasnachbehandlungsanlage nach einem der Ansprüche 17 bis 26,
**dadurch gekennzeichnet,**
**dass** den zu den Abgassammelkanälen (22, 23) frei liegenden Kanten der im Übergang zwischen aufeinander folgenden Baueinheiten (2) vorgesehenen Zwischenlagen eine abdeckende Überbrückung (82) zugeordnet ist.

28. Abgasnachbehandlungsanlage nach einem der vorhergehenden Ansprüche,
**dadurch gekennzeichnet,**
**dass** zumindest teilweise zu den Funktionselementen insbesondere stirnseitig vorgelagert deren freien Anströmquerschnitt begrenzende Überdeckungen insbesondere Lochbleche (64) vorgesehen sind.

29. Abgasnachbehandlungsanlage nach einem der vorhergehenden Ansprüche,
**dadurch gekennzeichnet,**
**dass** die modular aus scheibenförmigen Baueinheiten (2) aufgebauten Abgasnachbehandlungsanlage (1) endseitige Deckelteile (7) aufweist und dass über die über Zuganker (8) verspannten Deckelteile (7) die dazwischen liegenden scheibenförmigen Baueinheiten (2) zusammengespannt sind.

30. Abgasnachbehandlungsanlage nach Anspruch 29,
**dadurch gekennzeichnet,**
**dass** die Zuganker (8) übergreifend zu den Rahmen (5) verlaufen.

## Claims

1. Encapsulated exhaust-gas aftertreatment system (1) which has supply ports (24, 25) in the encapsulation and which is constructed in modular fashion from disc-shaped structural units (2) which are connected to one another in succession transversely with respect to the disc plane and which have exhaust-gas aftertreatment units (3) through which flow passes in the direction of the disc plane, which exhaust-gas aftertreatment units, in relation to the throughflow direction, running in the direction of the disc plane, of the structural units (2), are situated between collecting ducts (22, 23) which are integrated into the structural units (2), which extend continuously through the structural units (2) transversely with respect to the disc planes and which are open to the supply ports (24, 25),
**characterized**
**in that** the exhaust-gas aftertreatment units (3) of a structural unit (2) are constructed from block-like functional elements which are arranged, in rows, in succession transversely with respect to the throughflow direction in the disc plane.

2. Exhaust-gas aftertreatment system according to Claim 1,
**characterized**
**in that**, in the structural units (2), exhaust-gas aftertreatment units (3) of different function are arranged in series in the throughflow direction.

3. Exhaust-gas aftertreatment system according to Claim 1 or 2,
**characterized**
**in that** the structural units (2) are of chambered form and have in each case one inflow-side chamber (27) and one outflow-side chamber (28) which, as functional elements (12 to 14), accommodate exhaust-gas aftertreatment units (3) of different function and are connected via a transfer line (29).

4. Exhaust-gas aftertreatment system according to one of the preceding claims,
**characterized**
**in that** the functional elements (12 to 14) assigned to a structural unit (2) have an oxidation catalytic converter (9), a particle filter (10) and/or a nitrogen oxide catalytic converter (11).

5. Exhaust-gas aftertreatment system according to Claim 3 or 4,
**characterized**
**in that** the inflow-side chamber (27) accommodates, as functional elements (12, 13), the oxidation catalytic converter (9) and the particle filter (12).

6. Exhaust-gas aftertreatment system according to one of Claims 3 to 5,
**characterized**
**in that** the outflow-side chamber (28) accommodates, as functional element (14), the nitrogen oxide catalytic converter (11), to which flow passes via the transfer line (29).

7. Exhaust-gas aftertreatment system according to Claim 6,
**characterized**
**in that** the nitrogen oxide catalytic converter (11) is in the form of an SCR catalytic converter and is connected via the transfer line connection (29) to a urea supply, in particular in the form of a dosing unit (34), and/or to a hydrolysis catalytic converter which is in particular positioned downstream of a dosing unit (34).

8. Exhaust-gas aftertreatment system according to one of the preceding claims,
**characterized**
**in that** a respective structural unit (2) has a frame (5) which forms a part of the encapsulation, and the transfer line (29) is formed at least partially by ducts (30 to 32) running in the frame (5) or along the frame (5).

9. Exhaust-gas aftertreatment system according to Claim 6 or 8,
**characterized**
**in that** the transfer line (29) is provided so as to extend around the inflow-side chamber (27).

10. Exhaust-gas aftertreatment system according to one of Claims 3 to 9,
**characterized**
**in that** the inflow-side chamber (27) is separated from the outflow-side chamber (28) by means of a transverse web (26) of the frame (5), which transverse web is situated between duct parts (30, 31), which proceed from the inflow-side chamber (27) and issue into the outflow-side chamber (28), of the transfer line (29).

11. Exhaust-gas aftertreatment system according to one of Claims 9 or 10,
**characterized**
**in that** the transfer line (29) comprises a connecting duct (32) which, extending around the periphery of the inflow-side chamber (27), runs between the duct parts (30, 31) which are separated by a web (33).

12. Exhaust-gas aftertreatment system according to one of Claims 6 to 11,
**characterized**
**in that** the transfer line (29) has a connector for a maintenance unit (36).

13. Exhaust-gas aftertreatment system according to one of Claims 6 to 12,
**characterized**
**in that** the dosing unit (34) and the maintenance unit (36) are arranged so as to be exchangeable and/or are formed as a structural unit.

14. Exhaust-gas aftertreatment system according to one of Claims 7 to 13,
**characterized**
**in that** the transfer line (29) is in the form of a mixing path (66).

15. Exhaust-gas aftertreatment system according to Claim 14,
**characterized**
**in that**, in the region of the connecting duct (32), the transfer line (29) is in the form of a mixing path (66).

16. Exhaust-gas aftertreatment system according to one of Claims 3 to 15,
**characterized**
**in that** the functional elements (12 to 14) which are arranged in succession transversely with respect to the throughflow direction (4) in the disc plane are of block-like form.

17. Exhaust-gas aftertreatment system according to one of Claims 3 to 16,
**characterized**
**in that** the functional elements (12 to 14) which are arranged in succession in the disc plane of a structural unit (2) transversely with respect to the throughflow direction are supported against one another via intermediate layers.

18. Exhaust-gas aftertreatment system according to one of Claims 3 to 17,
**characterized**
**in that** the functional elements of successive structural units (2) are supported against one another transversely with respect to the throughflow direction of the structural units (2) via intermediate layers (41).

19. Exhaust-gas aftertreatment system according to Claim 18,
**characterized**
**in that** the mutually corresponding functional elements (for example 12, 12) of successive structural units (2) are supported against one another transversely with respect to the throughflow direction of the structural units (2) via the intermediate layers (41).

20. Exhaust-gas aftertreatment system according to one of Claims 17 to 19,
**characterized**
**in that** the intermediate layers (for example 41) are of elastic form.

21. Exhaust-gas aftertreatment system according to one of Claims 17 to 20,
**characterized**
**in that** the intermediate layers (for example 41) are of gas-tight form.

22. Exhaust-gas aftertreatment system according to one of Claims 17 to 21,
**characterized**
**in that** fibre mats (17) are provided as intermediate layers (for example 41).

23. Exhaust-gas aftertreatment system according to one of Claims 17 to 22,
**characterized**
**in that** the intermediate layers are formed by fibre mats (56) and by fibre mat carriers (55).

24. Exhaust-gas aftertreatment system according to one of Claims 17 to 23,
**characterized**
**in that** the intermediate layers form throughflow paths, which are delimited with respect to one another in the manner of chimneys, for successive functional elements (12, 13) in the throughflow direction (4).

25. Exhaust-gas aftertreatment system according to one of Claims 17 to 24,
**characterized in that** the functional elements (12 to 14) of a row are braced between mutually opposite sides, extending in the throughflow direction (4), of the frame (5).

26. Exhaust-gas aftertreatment system according to one of Claims 17 to 25,
**characterized**
**in that** in each case successive structural units (2) are delimited with respect to and supported against one another by interposed fibre mats (17) in the region of the frame (5) and of the functional elements (12 to 14).

27. Exhaust-gas aftertreatment system according to one of Claims 17 to 26,
**characterized**
**in that** a covering bridge (82) is assigned to the edges, which are exposed to the exhaust-gas collecting ducts (22, 23), of the intermediate layers provided at the transition between successive structural units (2).

28. Exhaust-gas aftertreatment system according to one of the preceding claims,
**characterized**
**in that** covers, in particular perforated plates (64), are provided which are positioned at least partially in front of the functional elements, in particular at the face side, and so as to limit the free flow-impingement cross section thereof.

29. Exhaust-gas aftertreatment system according to one of the preceding claims,
**characterized**
**in that** the exhaust-gas aftertreatment system (1) constructed in modular fashion from disc-shaped structural units (2) has end-side cap parts (7) and in that, by means of the cap parts (7) which are braced by means of tie rods (8), the disc-shaped structural units (2) situated in between are braced together.

30. Exhaust-gas aftertreatment system according to Claim 29,
**characterized**
**in that** the tie rods (8) run so as to extend over the frames (5).

## Revendications

1. Dispositif de traitement de gaz d'échappement encapsulé (1), qui présente des raccords d'alimentation (24, 25) côté capsule et est construit de façon modulaire à partir d'unités de construction en forme de disques (2), qui sont assemblées les unes aux autres l'une après l'autre transversalement au plan des disques et qui présentent des unités de traitement de gaz d'échappement (3) parcourues dans la direction du plan des disques qui sont situées, par rapport à la direction d'écoulement à travers les unités de construction (2) s'étendant dans la direction du plan des disques, entre des canaux de collecte (22, 23) qui sont intégrés dans les unités de construction (2), s'étendent en continu sur les unités de construction (2) transversalement aux plans des disques et sont ouverts vers les raccords d'alimentation (24, 25), **caractérisé en ce que** les unités de traitement de gaz d'échappement (3) d'une unité de construction (2) sont construites à partir d'éléments fonctionnels en forme de blocs, qui sont disposés en colonnes transversalement à la direction d'écoulement à la suite l'un de l'autre dans le plan des disques.

2. Dispositif de traitement de gaz d'échappement selon la revendication 1, **caractérisé en ce que** des unités de traitement de gaz d'échappement (3) de fonction différente sont disposés l'un derrière l'autre dans la direction d'écoulement dans les unités de construction (2).

3. Dispositif de traitement de gaz d'échappement selon la revendication 1 ou 2, **caractérisé en ce que** les unités de construction (2) sont réalisées en forme de chambres et présentent respectivement une chambre (27) côté entrée ainsi qu'une chambre (28) côté sortie, qui contiennent comme éléments fonctionnels (12 à 14) des unités de traitement de gaz d'échappement (3) et qui sont raccordées par un passage (29).

4. Dispositif de traitement de gaz d'échappement selon l'une quelconque des revendications précédentes, **caractérisé en ce que** les éléments fonctionnels (12 à 14) associés à une unité de construction (2) comportent un catalyseur d'oxydation (9), un filtre à particules (10) et/ou un catalyseur d'oxydes d'azote (11).

5. Dispositif de traitement de gaz d'échappement selon la revendication 3 ou 4, **caractérisé en ce que** la chambre côté entrée (27) présente comme éléments fonctionnels (12, 13) le catalyseur d'oxydation (9) et le filtre à particules (12).

6. Dispositif de traitement de gaz d'échappement selon l'une quelconque des revendications 3 à 5, **caractérisé en ce que** la chambre côté sortie (28) contient comme élément fonctionnel (14) le catalyseur d'oxydes d'azote (11), qui est abordé par le passage (29).

7. Dispositif de traitement de gaz d'échappement selon la revendication 6, **caractérisé en ce que** le catalyseur d'oxydes d'azote (11) se présente sous la forme d'un catalyseur SCR et est raccordé par la connexion de passage (29) à une arrivée d'urée, en particulier sous la forme d'une unité de dosage (34), et/ou à un catalyseur d'hydrolyse disposé en particulier après une unité de dosage (34).

8. Dispositif de traitement de gaz d'échappement selon l'une quelconque des revendications précédentes, **caractérisé en ce qu'**une unité de construction respective (2) présente un cadre (5) formant une partie de la capsule et le passage (29) est formé au moins en partie par des canaux (30 à 32) s'étendant dans le cadre (5) ou le long du cadre (5).

9. Dispositif de traitement de gaz d'échappement selon la revendication 6 ou 8, **caractérisé en ce que** le passage (29) est prévu en chevauchement sur la chambre côté entrée (27).

10. Dispositif de traitement de gaz d'échappement selon l'une quelconque des revendications 3 à 9, **caractérisé en ce que** la chambre côté entrée (27) est séparée de la chambre côté sortie (28) par une nervure transversale (26) du cadre (5), qui est située entre des parties de canal (30, 31) du passage (29) partant de la chambre côté entrée (27) et débouchant sur la chambre côté sortie (28).

11. Dispositif de traitement de gaz d'échappement selon une des revendications 9 ou 10, **caractérisé en ce que** le passage (29) comprend un canal de liaison (32), qui s'étend entre les parties de canal (30, 31) séparées par une nervure (33) en entourant côté périphérie vers la chambre côté entrée (27).

12. Dispositif de traitement de gaz d'échappement selon l'une quelconque des revendications 6 à 11, **caractérisé en ce que** le passage (29) présente un raccord pour une unité d'entretien (36).

13. Dispositif de traitement de gaz d'échappement selon l'une quelconque des revendications 6 à 12, **caractérisé en ce que** l'unité de dosage (34) et l'unité d'entretien (36) sont disposées de façon remplaçable et/ou sont réalisées comme une unité de construction.

14. Dispositif de traitement de gaz d'échappement selon l'une quelconque des revendications 7 à 13, **caractérisé en ce que** le passage (29) est réalisé comme une zone de mélange (66).

15. Dispositif de traitement de gaz d'échappement selon la revendication 14, **caractérisé en ce que** le passage (29) est réalisé comme une zone de mélange (66) dans la région du canal de liaison (32).

16. Dispositif de traitement de gaz d'échappement selon l'une quelconque des revendications 3 à 15, **caractérisé en ce que** les éléments fonctionnels (12 à 14) se succédant mutuellement dans le plan des disques transversalement à la direction d'écoulement (4) sont réalisés en forme de blocs.

17. Dispositif de traitement de gaz d'échappement selon l'une quelconque des revendications 3 à 16, **caractérisé en ce que** les éléments fonctionnels (12 à 14) se succédant mutuellement dans le plan de disque d'une unité de construction (2) transversalement à la direction d'écoulement sont appuyés l'un contre l'autre au moyen de couches intermédiaires.

18. Dispositif de traitement de gaz d'échappement selon l'une quelconque des revendications 3 à 17, **caractérisé en ce que** les éléments fonctionnels d'unités de construction successives (2) sont appuyés l'un contre l'autre au moyen de couches intermédiaires (41) transversalement à la direction d'écoulement à travers les unités de construction (2).

19. Dispositif de traitement de gaz d'échappement selon la revendication 18, **caractérisé en ce que** les éléments fonctionnels (p. ex. 12, 12) se correspondant mutuellement d'unités de construction successives (2) sont appuyés l'un contre l'autre au moyen des couches intermédiaires (41) transversalement à la direction d'écoulement à travers les unités de construction (2).

20. Dispositif de traitement de gaz d'échappement selon l'une quelconque des revendications 17 à 19, **caractérisé en ce que** les couches intermédiaires (p. ex. 41) sont élastiques.

21. Dispositif de traitement de gaz d'échappement selon l'une quelconque des revendications 17 à 20, **caractérisé en ce que** les couches intermédiaires (p. ex. 41) sont étanches aux gaz.

22. Dispositif de traitement de gaz d'échappement selon l'une quelconque des revendications 17 à 21, **caractérisé en ce qu'**il est prévu des tapis de fibres (17) comme couches intermédiaires (p. ex . 41).

23. Dispositif de traitement de gaz d'échappement selon l'une quelconque des revendications 17 à 22, **caractérisé en ce que** les couches intermédiaires sont formées par des tapis de fibres (56) et des supports de tapis de fibres (55).

24. Dispositif de traitement de gaz d'échappement selon l'une quelconque des revendications 17 à 23, **caractérisé en ce que** des chemins d'écoulement de type cheminées séparés les uns des autres sont formés à travers les couches intermédiaires pour des éléments fonctionnels (12, 13) successifs dans la direction d'écoulement (4).

25. Dispositif de traitement de gaz d'échappement selon l'une quelconque des revendications 17 à 24, **caractérisé en ce que** les éléments fonctionnels (12 à 14) d'une ligne sont serrés entre des côtés du cadre (5) opposés l'un à l'autre et s'étendant dans la direction d'écoulement (4).

26. Dispositif de traitement de gaz d'échappement selon l'une quelconque des revendications 17 à 25, **caractérisé en ce que** des unités de construction (2) respectivement successives sont séparées et appuyées les unes par rapport aux autres au moyen de tapis de fibres interposés (17) dans la région du cadre (5) et des éléments fonctionnels (12 à 14).

27. Dispositif de traitement de gaz d'échappement selon l'une quelconque des revendications 17 à 26, **caractérisé en ce qu'**un pontage de couverture (82) est associé aux côtés libres vers les canaux de collecte de gaz d'échappement (22, 23) des couches intermédiaires prévues dans la transition entre des unités de construction successives (2).

28. Dispositif de traitement de gaz d'échappement selon l'une quelconque des revendications précédentes, **caractérisé en ce qu'**il est prévu des recouvrements, en particulier des tôles perforées (64), disposées au moins en partie en avant, en particulier côté frontal, par rapport aux éléments fonctionnels, en limitant leur section transversale d'entrée libre.

29. Dispositif de traitement de gaz d'échappement selon l'une quelconque des revendications précédentes, **caractérisé en ce que** le dispositif de traitement de gaz d'échappement (1) construit de façon modulaire à partir d'unités de construction (2) en forme de disques présente des parties de couvercle (7) côté extrémité, et **en ce que** les unités de construction en forme de disques (2) situées entre les parties de couvercle (7) sont serrées entre celles-ci au moyen de tirants (8).

30. Dispositif de traitement de gaz d'échappement selon la revendication 29, **caractérisé en ce que** les tirants (8) s'étendent en chevauchement sur les cadres (5).
